# EUROPÄISCHE PATENTSCHRIFT

(11) **EP 2 132 548 B1**
(45) Veröffentlichungstag und Bekanntmachung des Hinweises auf die Patenterteilung: **15.05.2013**
(21) Anmeldenummer: 08784495.7
(22) Anmeldetag: 31.03.2008
(51) Int. Cl.: G01M 17/04, G01H 1/00

(54) **ANORDNUNG UND VERFAHREN ZUR ERFASSUNG UND/ODER AUSWERTUNG VON SCHWINGUNGEN BEWEGTER UND/ODER EINEN ANTRIEB AUFWEISENDER KÖRPER UND/ODER STRUKTUREN**
ARRANGEMENT AND METHOD FOR DETERMINING AND/OR EVALUATING BODIES AND/OR STRUCTURES MOVED BY VIBRATIONS AND/OR HAVING A DRIVE
ENSEMBLE ET PROCÉDÉ POUR DÉTECTER ET/OU ÉVALUER DES VIBRATIONS DE CORPS ET/OU STRUCTURES EN MOUVEMENT ET/OU PRÉSENTANT UN ENTRAÎNEMENT

(30) Priorität: 30.03.2007 DE 102007015774
(43) Veröffentlichungstag der Anmeldung: 16.12.2009
(73) Patentinhaber: Micro-Epsilon Messtechnik GmbH & Co. KG, 94496 Ortenburg (DE)
(72) Erfinder: REHWALD, Uwe, 84171 Baierbach (DE)
(74) Vertreter: Ullrich & Naumann
(86) Internationale Anmeldenummer: PCT/EP2008/002552
(87) Internationale Veröffentlichungsnummer: WO 2008/141695

(56) Entgegenhaltungen:
- EP-A- 1 591 770
- WO-A-2006/030786
- DE-A1- 3 937 403
- DE-A1- 10 258 335
- GB-A- 2 315 051
- US-A1- 2003 030 565

## Beschreibung

Die Erfindung betrifft eine Vorrichtung bzw. eine Anordnung und ein Verfahren zur Schwingungsmessung an Strukturbauteilen und Körpern. Insbesondere betrifft die Erfindung eine Anordnung zur Erfassung und/oder Auswertung von Schwingungen bewegter und/oder einen Antrieb aufweisender Körper und/oder Strukturen, insbesondere von Fahrzeugen bzw. von Kraftfahrzeugen, mit wenigstens einem Schwingungssensor, der mit einer Auswerteeinheit gekoppelt ist. Weiterhin betrifft die Erfindung ein entsprechendes Messverfahren.

### Stand der Technik

Verfahren zur Schwingungsmessung sind bekannt. Sie werden vorwiegend für spezifische Messwertermittlungen verwendet, bspw. zur messtechnischen Erfassung des Laufverhaltens von Werkzeugmaschinen. Charakteristisches Merkmal bei derartigen Messverfahren ist das Vorliegen einer Maschinenbewegung, i.d.R. eine rotierende Bewegung. Meist wird das Laufverhalten schnell rotierender Teile untersucht, bspw. zur Ermittlung von Schäden an wälz- oder gleitgelagerten Wellen o. dgl.

Für der Untersuchung des Verschleißverhaltens langsam drehender oder nicht rotierender Teile eignen sich die bekannten Messverfahren nicht, da die ermittelten Messwerte bisher in keinen sinnvollen Zusammenhang mit den zu ermittelnden Maschinenparametern gebracht werden konnten. Zudem liegen keine Erfahrungen vor, die zu den gewünschten Interpretationen führen können.

Aus der DE 100 28 749 A1 ist ein Verfahren zum Erkennen von Schäden an Stoßdämpfern von Kraftfahrzeugen bekannt. Bei diesem Verfahren werden zur Ermittlung der Dämpfungseigenschaften des Stoßdämpfers die Signale eines Raddrehzahlsensors ausgewertet, der im Rahmen eines Antiblockiersystems zur Verfügung steht. Das Verfahren kann vorsehen, dass der zeitliche Verlauf einer Radiusänderung eines Reifens gemessen oder dass der zeitliche Verlauf einer Drehgeschwindigkeitsänderung der Felge anhand des Signals des Raddrehzahlsensors des Antiblockiersystems gemessen wird.

Ein Ziel der vorliegenden Erfindung wird darin gesehen, eine Messanordnung bzw. ein Verfahren zur Verfügung zu stellen, das eine kostengünstige und effektive Fehlerermittlung bei sich bewegenden oder bei bewegten Strukturbauteilen und Körpern ermöglicht.

### Beschreibung der Erfindung

Dieses Ziel der Erfindung wird mit dem Gegenstand der unabhängigen Ansprüche erreicht. Merkmale vorteilhafter Weiterbildungen der Erfindung ergeben sich aus den abhängigen Ansprüchen.

Die Erfindung umfasst eine Anordnung zur Erfassung und/oder Auswertung von Schwingungen bewegter und/oder einen Antrieb aufweisender Körper und/oder Strukturen, insbesondere von Fahrzeugen bzw. von Kraftfahrzeugen, mit wenigstens einem Schwingungssensor, der mit einer Auswerteeinheit gekoppelt ist. Erfindungsgemäß ist vorgesehen, dass der wenigstens eine Sensor einen Messaufnehmer umfasst, der zur Erfassung eines Schwingungsverhaltens am Körper bzw. an der Struktur angeordnet ist.

Eine Ausführungsvariante der Erfindung sieht vor, dass der wenigstens eine Sensor einen piezoelektrischen Messaufnehmer umfasst. Der Gegenstand der Patentanmeldung basiert somit auf der Grundlage einer Schwingungsmessung mittels Piezo-Beschleunigungsaufnehmer. Neu ist die Anwendung der Messung in Kraftfahrzeugen und zwar an statischen, also sich nicht drehenden Teilen.

Wahlweise kann als Sensor auch ein mikromechanischer Sensor verwendet werden. Derartige Beschleunigungssensoren sind sehr kostengünstig verfügbar und werden typischerweise in Kraftfahrzeugen im Zusammenhang mit der Auslösesteuerung von Insassenrückhaltesystemen (Airbags etc.) eingesetzt. Die Messergebnisse von mikromechanischen, elektrodynamischen und/oder piezoelektrischen Sensoren sind für den vorliegenden Einsatzzweck gleichermaßen geeignet. Die Hardware kann

Aus der GB 2 315 051 ist eine Anordnung zur Erfassung und Auswertung von Schwingungen bewegter oder einen Antrieb aufweisender Körper bekannt. Zur Durchführung einer Schwingungsmessung bei einem stillstehenden Fahrzeug wird eine vertikale nach unten gerichtete Kraft durch einen Anwender auf das Fahrzeug aufgebracht.

In der US 393 96 92 erfolgt die Anregung eines Fahrzeuges oder Kraftfahrzeugs mittels eines Keils. Dabei fährt das Fahrzeug von einer Seite den Keil nach oben, um an der steilen Seite des Keils herabzufallen. allerdings mit Hilfe derartiger mikromechanischer Sensoren kostengünstiger ausfallen. Ein weiterer Vorteil derartiger Sensoren besteht darin, dass sie typischerweise mit einer Spannung von 12 Volt betrieben werden können, wie sie im Fahrzeugbordnetz zur Verfügung steht.

Mögliche Ausführungsvarianten - insbesondere für Anwendungen im Bereich der Fahrzeugmessung - können bspw. folgende Konfigurationen vorsehen:
- Anbringen der Sensoren am oberen Ende der Stoßdämpferkolbenstange;
- die Anbringung der Sensoren am Stoßdämpferdom;
- die Anbringung der Sensoren an den Federn;
- die Anbringung der Sensoren an Gelenken;
- die Anbringung der Sensoren an Lenkern und Aufhängungen;
- die Anbringung der Sensoren an Stabilisatoren;
- die Anbringung der Sensoren an verschiedenen Punkten der Karosserie;
- die Anbringung der Sensoren an der Auspuffanlage.

Durch die wahlweise Anbringung der Sensoren an unterschiedlichen Messpunkten bzw. an mehreren dieser Messpunkte können die verschiedensten Bauteile gemessen werden. So ist bspw. eine Beurteilung vom einzelnen Stoßdämpfer, bis hin zum einzelnen Traggelenk möglich. Dadurch wird ein defektes Bauteil sofort entdeckt. Selbst Schäden die noch lange nicht vom Fahrer, oder gar von der Werkstatt, oder von einer technischen Prüfungs- bzw. Überwachungsstelle bemerkt werden, sind mit der Schwingungsmesstechnik zu ermitteln. Das bedeutet, dass Teile nicht auf Verdacht ausgetauscht werden. Ein Austausch ist nur erforderlich, wenn auch wirklich ein Schaden vorliegt.

Die erfindungsgemäße Anordnung zur Erfassung und/oder Auswertung von Schwingungen bewegter und/oder einen Antrieb aufweisender Körper und/oder Strukturen, insbesondere von Fahrzeugen bzw. von Kraftfahrzeugen, sieht wenigstens einem Schwingungssensor vor, der mit einer Auswerteeinheit gekoppelt ist. Die Anordnung ist dadurch gekennzeichnet, dass der wenigstens eine Schwingungssensor einen Messaufnehmer umfasst, der zur Erfassung eines Schwingungsverhaltens am Körper bzw. an der Struktur angeordnet ist. Der wenigstens eine Schwingungssensor kann insbesondere einen piezoelektrischen Messaufnehmer umfassen. Wahlweise sind jedoch auch andere Messprinzipien möglich, bspw. elektrodynamische Messaufnehmer oder solche mit bewegten Teilen, die mit Magnetspulen zusammenwirken.

Der wenigstens eine Schwingungssensor ist vorzugsweise unmittelbar bzw. ungedämpft am Körper bzw. an der Struktur angebracht, um möglichst präzise Messwerte liefern zu können, die nicht durch eine dämpfende Zwischenlage zwischen Struktur und Messaufnehmer verfälscht werden.

Der Körper bzw. die Struktur kann eine Fahrzeugkarosserie sein. Die Fahrzeugkarosserie ist insbesondere Teil eines Kraftfahrzeugs. Die Fahrzeugkarosserie kann jedoch auch Teil eines Schienenfahrzeugs sein. Der Körper bzw. die Struktur kann ebenso ein Antriebsaggregat sein. So kann das Antriebsaggregat bspw. eine Verbrennungskraftmaschine, eine elektrische Maschine oder eine Turbine, insbesondere eine Antriebsturbine eines Flugzeugs sein.

Der Körper bzw. die Struktur kann jedoch in alternativer Ausführungsvariante auch Teil eines Fahrwerks eines Kraftfahrzeugs oder Teil eines Fahrwerks eines Schienenfahrzeugs sein.

Die Erfindung umfasst weiterhin ein Verfahren zur Erfassung und/oder Auswertung von Schwingungen bewegter und/oder einen Antrieb aufweisender Körper und/oder Strukturen, insbesondere von Fahrzeugen bzw. von Kraftfahrzeugen, bei dem die Signale wenigstens eines Schwingungssensor, der mit einer Auswerteeinheit gekoppelt ist, ausgewertet werden. Erfindungsgemäß ist das Verfahren dadurch gekennzeichnet, dass der wenigstens eine Schwingungssensor einen Messaufnehmer umfasst, der ein Schwingungsverhalten des Körpers bzw. der Struktur erfasst und in Messsignale wandelt. Das Schwingungsverhalten des Körpers bzw. der Struktur kann insbesondere mittels eines piezoelektrischen Messaufnehmers erfasst werden. Der wenigstens eine Schwingungssensor erfasst die Schwingungen des Körpers bzw. der Struktur vorzugsweise unmittelbar bzw. weitgehend ungedämpft.

Bei dem Verfahren kann vorgesehen sein, dass das Schwingungsverhalten einer Fahrzeugkarosserie bzw. einer Schienenfahrzeugkarosse erfasst wird. Es kann jedoch auch vorgesehen sein, dass das Schwingungsverhalten eines Antriebsaggregates, insbesondere einer Verbrennungskraftmaschine oder einer elektrischen Maschine erfasst wird. Ebenso kann das Schwingungsverhalten einer Turbine, insbesondere einer Antriebsturbine eines Flugzeugs erfasst werden. Alternativ kann das Schwingungsverhalten eines Fahrwerks eines Kraftfahrzeugs oder das Schwingungsverhalten eines Fahrwerks eines Schienenfahrzeugs erfasst werden.

Vorzugsweise werden die von dem wenigstens einen Schwingungssensor gelieferten Messsignale in der Auswerteeinheit gespeichert und/oder visualisiert, bspw. auf Papier, auf einem Bildschirm oder auf andere Weise. Die Messsignale können auch zur weiteren Verwendung mittels einer Datenverarbeitungsanlage weiterverarbeitet werden.

Besonders vorteilhafte Anwendungsfälle für die Erfindung können dadurch erzielt werden, dass mehrere Schwingungssensoren verwendet werden.

Durch den Einsatz von piezoelektrischen Beschleunigungssensoren in Fahrzeugen lassen sich die verschiedensten Messaufgaben realisieren. Die Schwingungsaufnehmer sind mit einer Innenbeschaltung versehen. Es gibt sie in verschiedenen Bauformen und mit unterschiedlichen Empfindlichkeiten. Die hier verwendeten haben z.B. Kennwerte von 100mV/g oder 10mV/g. Die geringere Empfindlichkeit der 10mV-Sensoren erlaubt einen größeren Messbereich und damit eine höhere Übersteuerungsgrenze. Die Messelektronik kann problemlos auf die Aufnehmerempfindlichkeit ausgelegt werden. Auch können durch Änderung der Empfindlichkeit verschiedene Sensoren kalibriert werden. Die Gehäuse sind doppelwandig und potential- und masse- getrennt. Somit sind Störungen durch die Fahrzeugelektrik, wie z.B. Zündanlagen ausgeschlossen.

Ein Schwingungsaufnehmer wird an das zu messende Bauteil angebracht. Durch die Aufnahmerichtung lassen sich zum Beispiel axiale bzw. radiale Schwingungen aufnehmen. Der Sensor wird mit einer Auswerteeinheit verbunden. Diese erlaubt durch Trennung des Signals in nieder- und höherfrequente Schwingungen, zwei voneinander getrennte Messergebnisse auszuwerten. Das heißt, das Ergebnis wird als Schwinggeschwindigkeit in mm/ s und das zweite Ergebnis als sog. gSE- Wert ausgegeben. Dieser bewertet z.B. die Güte eines Wälzlagers.

Die erfassten Daten werden online an ein Notebook direkt übertragen und als Excel- Datei abgelegt. Somit ist eine einfache Weiter- und Nachbearbeitung schnell und einfach möglich.

Bei einer Fahrwerksmessung wird ein Beschleunigungsaufnehmer unten am Fahrwerk, z.B. Federbein, angebracht. Das bedeutet, dass dieser Aufnehmer die gesamten ungefederten Schwingungen aufnehmen kann. Ein zweiter Aufnehmer wird oben am Stoßdämpfer angebracht. Dieser erkennt nur noch die vom Stoßdämpfer durchgelassenen Restschwingungen. Dadurch kann der Zustand des Stoßdämpfers sofort bewertet werden.

Bei einem perfekt funktionierenden Stoßdämpfer können wir Werte erwarten, die um ca. 2 - 3mm/s liegen. Große Unebenheiten können den Wert bis zu 12 - 15mm/s in die Höhe treiben.

Stoßdämpfer mit nachlassender Dämpferwirkung liegen vom Grundniveau schon wesentlich höher, so um ca. 5 -10mm/s. Unebenheiten und Schlaglöcher kommen dann schon mal bis zu 40mm/s durch.

Komplett defekte Stoßdämpfer erkennt man an Werten die im Grundniveau bereits Werte von ca. 30 -40mm/s anzeigen. Schläge kommen dann schon mal auf 70 bis über 100mm/s.

Durch Anbringung eines Sensors, so weit wie möglich in der Nähe der Radnabe, ist mit der Ermittlung des gSE- Wertes, eine Beurteilung des Radlagerzustands gegeben.

Ein weiterer Messpunkt ist der Anlenkpunkt des Stabilisators. So ist die Wirkungsweise des Stabilisators erkennbar. Dabei werden ausgeschlagene Gelenke sofort mit höheren Werten erkannt.

Genauso ist durch entsprechende Anbringung der Schwingungssensoren, eine Fehlererkennung an allen anderen Fahrwerksteilen möglich. Somit sind hier ebenfalls ausgeschlagene Lenker und Gelenke erkennbar.

Durch Anbringung eines Beschleunigungsaufnehmers am oberen Ende des Stoßdämpfers und einen zweiten am Stoßdämpferdom (Karosserie), kann die Dämpferwirkung des Domlagers überprüft werden. Als Erkenntnis kommt dabei heraus, dass die Dämpferwirkung ca, 2/3 beträgt. Das heißt Schwingwerte am Stoßdämpfer von 30 mm/s werden an der Karosserie mit nur noch 10 mm/s gemessen. Beim Bremsen jedoch steigt die Domlagerbelastung an. Das heißt das Domlager wird mehr gestresst als der Stoßdämpfer / Federbein.

Eine sinnvolle und hier als Grundlage der Anmeldung dienende Messanordnung, sind jeweils 3 Schwingungssensoren an je einem Federbein. Zusätzlich können nochmals 3 weitere Sensoren im Bereich des Antriebs angebracht und überwacht werden. So ist es sinnvoll einen am Motor, einen am Getriebe und den Dritten am Differential anzubringen. Dann sind insgesamt 15 Messsensoren möglich.

Natürlich sind auch andere Messpunkte je nach Bedarf und Einsatzzweck sinnvoll und möglich.

Desweiteren besteht die Möglichkeit ein oder mehrere Drehzahlsignale mit zu erfassen, aufzuzeichnen und darzustellen. Es besteht also die Möglichkeit die Drehzahl des Motors aufzuzeichnen und die Drehzahl eines jeden Rades. Somit lassen sich genaue Fahrbahnzustände erfassen und Vergleichswerte bei verschiedenen Stoßdämpfer / Federkennlinien ermitteln. Auch besteht durch die Anbringung von Temperatursensoren (PT1000) eine weitere Messgrößenerfassung.

Das System kann folgende Messwerte erfassen und auswerten:
- Schwinggeschwindigkeit in mm/s,
- Lagerzustand in gSE,
- Temperatur in °C,
- Drehzahl 1/min.

Weitere Aspekte und Ausführungsvarianten der Erfindung werden nachfolgend diskutiert. Grundlage der zuvor beschriebenen Varianten der Schwingungsmessung ist meist die Messwerterfassung mittels Piezo-Beschleunigungsaufnehmern. Wahlweise besteht jedoch als alternative Messhardware die Möglichkeit, mit MEMS-Sensoren zu messen. Dies hat den Vorteil, dass die MEMS um einiges billiger sind. Die Messergebnisse sind die gleichen, aber die verwendete Hardware wird wesentlich billiger. Derartige MEMS-Sensoren (mikromechanische Sensoren) werden bspw. im Fahrzeugbau zur Erkennung von Auslösesituationen für Rückhalteeinrichtungen (Airbags) eingesetzt. Neu ist die Anwendung der Messung in Kraftfahrzeugen und zwar an statischen, also sich nicht drehenden Teilen.

Die Anbringung der Sensoren kann bspw. am oberen Ende der Stoßdämpferkolbenstange erfolgen. Ein weiterer Sensor kann am unteren Teil des Stoßdämpfers angebracht werden, was die Überprüfung der Druck- und Zugstufe des Stoßdämpfers erlaubt. Die Sensoren können jedoch auch am Stoßdämpferdom, an den Federn, am Fahrwerk - d.h. Lenker, Gelenke, Lager, Befestigungen etc. - angebracht werden, wodurch diese Bauteile bewertet werden können. Möglich ist auch die Anbringung der Sensoren an Stabilisatoren, die Überprüfung der Koppelstangen.

Weiterhin können die Sensoren an der Karosserie angebracht werden, so z.B. je ein Sensor außen am Kotflügel vom links - rechts; je ein Sensor außen am Kotflügel hinten links - rechts; je ein Sensor links an der B- Säule und rechts an der B-Säule; ein Sensor auf dem Dach - mittig.

Die Anbringung außen an der Karosserie hat folgende Vorteile: so können die Sensoren leicht mittels Unterdruck- Saugnäpfen befestigt werden. Dadurch entsteht keinerlei Beschädigung am Lack oder Karosserieteilen. Zudem ist eine sehr schnelle Montage und Demontage gewährleistet. Es ist kein Öffnen der Hauben und möglicherweise Freilegung von geeigneten Blechstellen notwendig, um die Sensoren mit Magnetfüßen anzubringen. Es ist eine Messung von Karosserieschwingungen an allen nur denkbaren Stellen möglich. Dadurch können auch falsch dimensionierte Karosseriestrukturen aufgespürt werden, was sich bspw. durch ein Abreißen von Schweißpunkten etc. bemerkbar machen kann. Zudem können Dröhngeräuschen an der Karosserie aufgespürt werden, die verursacht sein können durch Motor-, Auspuffgeräusche und fahrbedingte Einflüsse.

Durch die unterschiedlichen Messpunkte können die verschiedensten Bauteile gemessen und/oder überprüft werden. So ist eine Beurteilung vom einzelnen Stoßdämpfer, bis hin zum einzelnen Traggelenk möglich. Dadurch wird ein defektes Bauteil sofort entdeckt. Selbst Schäden, die noch lange nicht vom Fahrer, oder gar von der Werkstatt, oder von einer Prüforganisation bemerkt werden, sind mit der Schwingungsmesstechnik zu ermitteln. Das bedeutet zunächst, dass nicht nur Teile auf Verdacht ausgetauscht werden. Und zum zweiten wird ein Austausch nur erforderlich, wenn auch wirklich ein Schaden vorliegt.

Im Fahrzeugbau und in der Überprüfung von Fahrzeugen lässt sich das System besonders vorteilhaft einsetzen. Alle Fahrzeuge müssen turnusmäßig eine technische Untersuchung (sog. Hauptuntersuchung) durchlaufen; hier gibt es die Aufgabe, eine Stoßdämpferprüfung durchzuführen. Bedingt durch das Fehlen eines praktikablen Prüfsystems beschränkt sich die zuständige Prüforganisation heute meist auf eine Sichtkontrolle. Dabei werden i.d.R. nur ganz verschlissene und undichte Dämpfer erkannt. Fahrzeuge mit total defekten Stoßdämpfern bekommen so eine Plakette für eine bestandene Untersuchung.

Durch die oben beschriebene Messmethode ist es jetzt grundsätzlich möglich, die notwendigen Prüfschritte durchzuführen. Jedoch muss dazu das Fahrzeug mit den angebrachten Sensoren gefahren werden, was Zeit kostet und oftmals organisatorische Probleme verursacht. Die vorliegende Erfindung bietet hierfür eine Lösung an. Jedes Fahrzeug fährt bei den Prüforganisationen oder in der Werkstatt grundsätzlich über den Rollen-Bremsenprüfstand. Durch das Einfahren in den Prüfstand und die Bremsbewegungen wird das Fahrzeug in Schwingungen versetzt, die über die angebrachten Schwingungssensoren gemessen werden. Das bedeutet, dass immer eine weitgehend gleiche Messmöglichkeit zur Verfügung steht. Der Vorgang ist immer der gleiche und somit sind die Ergebnisse alle miteinander vergleichbar.

Als Besonderheit ist noch zu erwähnen, dass die Messung der Vorderachse und der Hinterachse über nur die beiden Sensoren an den vorderen Stoßdämpferdomen erfolgt. Die Schwingwerte der Hinterachse werden über die Karosserie bis nach vorne übertragen. Durch die Anbringung am Dämpferdom, oder außen an der Karosserie, werden das gesamte Federbein und die gesamte Radaufhängung gemessen. Sobald irgendein Teil defekt ist und größere Schwingwerte erzeugt werden, wird dies aufgezeichnet. Das Ergebnis kann mit der so genanten Ampelfunktion bewertet werden. Geringe Schwingwerte bedeuten einen grünen Bereich. Erhöhte Werte, die eine Bewertung durch den Prüfer erfordern, bedeutet Gelb und hohe Werte bedeuten Rot und keine Plakette, sondern Austausch und Reparatur des defekten Bauteils.

Nachfolgend wird eine weitere Lösung für das erwähnte Problem skizziert: Die Messung kann ebenso auch ohne den Bremsenprüfstand erfolgen. Dazu wird das Fahrzeug über eine Schwelle gefahren. Diese kann bspw. durch eine durchgehende Schwelle von ca. 2m Länge gebildet sein. Das Fahrzeug fährt zuerst mit der Vorderachse und danach mit der Hinterachse über die Schwelle. Diese ist übrigens ca. 50 mm hoch und mind. 30 cm breit. Dadurch ist in einem Diagramm abzulesen, wie Druck- und Zugstufe des Stoßdämpfers arbeiten. Der Nachteil bei dieser Variante ist, dass mindestens zwei Sensoren am Fahrzeug angebracht werden müssen; besser aber sind insgesamt vier Sensoren, an jedem Kotflügel und über dem Rad.

Wahlweise kann auch eine Schwelle links vor dem linken Vorderrad und im Abstand von ca. 1 m vor der linken Schwelle auf der rechten Seite. Das bedeutet, dass das Fahrzeug zuerst mit dem linken Vorderrad und dann nach ca. 1 m mit dem rechten Vorderrad und dann mit dem linken Hinterrad und zum Schluss mit dem rechten Hinterrad über die jeweilige Schwelle fährt. Die Schwellen sind ca. 1 m lang, mind. 30 cm breit und auch ca. 5 cm hoch. Das Fahrzeug windet sich also sozusagen über die Schwellen und alle Stoßdämpfer, Federn und Gelenke werden bewegt. Dadurch ist eine genaue und zeitliche Verzögerung bei der Messung gegeben und die Messkurven folgen nacheinander mit der genauen jeweiligen Zuordnung. Ein Schaden ist sofort und genau definiert erkennbar. Auch ist der Vergleich von links nach rechts und vorne nach hinten sofort sicht- und bewertbar. Für diese Methode reicht es, zwei Sensoren an der B-Säule anzubringen. Es kann sogar ausreichen, nur einen Sensor mittig am Dach anzubringen. Dies bedeutet einen deutlichen Zeitvorteil für die jeweilige Prüfung. Zudem beschränkt sich die notwendige Verkabelung auf ein Minimum. Der Sensor kann an einem Spiralkabel befestigt sein, das direkt von der Decke über dem Prüfling montiert ist.

Um nun eine perfekte Vermessung und das perfekte Arbeiten der Stoßdämpfer zu überprüfen, kann die Messfahrt über drei nacheinander angebrachte Schwellen erfolgen. Dabei wird dann ersichtlich, ob die Dämpfer in ihre jeweilige Ausgangsposition zurückkehren oder ob sich ein so genantes Aufpumpen der Dämpfer ergibt. Das hat zur Folge, dass sich entweder ein Ansaugen an die Fahrbahn, oder ein Abstoßen der Karosserie ergibt. Beides ist für die Fahrdynamik ungünstig; möglicherweise ist ein unbeherrschbarer Fahrzustand mit Unfall die Folge. Die Schwellen können als durchgehende Schwellen ausgebildet sein, oder aber auch jeweils drei linke und drei rechte Schwellen.

Der allgemeine Vorteil der Schwellen-Messmethode ist der, dass die Schwellen z.B. in der Einfahrt zur Werkstatt verlegt werden können und somit jedes Fahrzeug, das in die Werkstatt fährt, auch automatisch über die Schwellen fährt. So ist die Möglichkeit der schnellen und ohne großen Aufwand durchführbaren Fahrwerksmessung gegeben. Der Kunde erhält einen Ausdruck, in dem sein Fahrzeug bewertet ist. Dadurch entsteht für die Werkstatt die Möglichkeit, Fahrwerksreparaturen durchzuführen, die sonst gar nicht entdeckt worden wären.

Bei den gesamten vorgenanten Messmöglichkeiten gibt es grundsätzlich die Möglichkeit, die Mess-Sensorik im Auto, wie auch außerhalb anzubringen. Für den stationären Bereich bietet sich die äußere Anbringung an. Dazu werden lediglich der oder die Sensoren am Fahrzeug angebracht. Die Hardware Auswerteeinheit befindet sich in einem Rollcontainer o. dgl. mit Drucker neben dem Fahrzeug.

Neben der erwähnten Möglichkeit der Fahrzeugüberprüfung bietet die Erfindung besondere Vorteile bei einem Einsatz im fahrenden Fahrzeug und/oder bei einem Einsatz im Motorsport. Für den dynamischen, also fahrenden Einsatz wird die gesamte Mess-Hardware im Fahrzeug installiert. Dort ist dann auch ein Daten auswertender Rechner (z.B. Laptop) mit im Fahrzeug platziert. Neu dazu gibt es noch die Möglichkeit der Funkdatenübertragung aus dem Fahrzeug heraus. Dazu wird eine drahtlose Funkübertragung wie bspw. eine Ethernet Verbindung zwischen Fahrzeug und Laptop realisiert, die eine Reichweite bis zu 5 km ermöglicht. Dies ist insbesondere für Abstimmungs- und Setup- Fahrten im Motorsport hilfreich. Der Renningenieur sitzt an seinem Arbeitsplatz, während das Fahrzeug seine Runden dreht. Zu dieser Anwendung ist es dann noch sinnvoll, ein Positioniersystem zu integrieren das über GPS-Signale eine genaue Positionierung des Fahrzeugs erkennt und gleichzeitig die Fahrwerksdaten dazu aufzeichnet, speichert und bewertet. Somit ist zentimetergenau das Fahrverhalten des Fahrzeugs nachvollziehbar. Werte der einzelnen Feder-Dämpfer-Kombination, Werte der Stabilisatoren sind sofort abrufbar und können online betrachtet werden. Fahrwerksänderungen sind sofort erkennbar und Einstellungsarbeiten in die "falsche Richtung" werden vermieden.

Als weitere Variante ist die Erweiterung des Mess-Systems um eine Anzahl von Temperaturmessstellen. Dies bedeutet eine weiter verbesserte Möglichkeit der Fahrzeug-Bauteile-Überwachung. Denkbar und realisierbar sind zwei Varianten mit entweder 8 oder 16 Temperaturmesskanälen. Auch diese Daten werden entweder im Fahrzeug erfasst und gespeichert, oder per Funk nach außen übertragen.

Weiterhin sind Messungen an Motor und Nebenaggregaten ermöglicht. Mit der Messmethode lassen sich noch weitere Messstellen abdecken wie bspw. Messungen am Motor und dessen Umfeld. Alle mechanischen Geräusche sind lokalisierbar. Bei entsprechenden Vergleichszahlen kann somit sofort eine Abweichung und damit ein Verschleiß festgestellt werden. Denkbare Messstellen sind der Ventiltrieb, die Ventilsteuerung, der Lauf der Kurbelwelle und der Kolben. Selbst die Qualität der Zündung und Verbrennung, sowie der Einspritzung lassen sich messen. Verschlissene Sitze der Einspritzventile oder gar abgenützte Zündkerzen lassen sich erkennen. Überwacht werden können darüber hinaus Geräusche und Vibrationen von Anbauaggregaten wie Lichtmaschine, Klimakompressor, E-Pumpe, Wasserpumpe, Benzinpumpe, Turbolader bis hin zum ABS-Ventilblock. All die Schwingungen dieser Aggregate lassen sich messen und bewerten. Ideal wäre in diesem Zusammenhang eine Datenbank eines jeden Fahrzeugs, auf das dann mit den Messdaten ein Vergleich hergestellt wird. Die Datenbank würde automatisch mit jedem neu gemessenen Modell wachsen. Denkbar wäre bei jedem Fahrzeug ein sog. elektronischer Fingerabdruck. Das heißt, dass die Werte des Neuwagens in einem Chip gespeichert sind und bei jedem Werkstattaufenthalt mit den neuen IST-Werten verglichen werden. Eine Abweichung lässt die normale Alterung erkennen, oder den Verschleiß eines der überwachten Bauteile. Dies bedeutet eine kostengünstige On-Bord Diagnose der Fahrzeuge.

Weiterhin können Messungen am Antriebsstrang durchgeführt werden. Auch hier lässt sich die Messmethode sehr erfolgreich einsetzen. Schwingungen von Kardanwelle oder Antriebswellen lassen sich ebenso sichtbar machen wie das Verhalten von Kegel- und Tellerrad des Differentials. Aber auch laute und schlecht laufende Getriebe und Verzahnungen lassen sich überprüfen. Geräusche werden schnell lokalisiert und die entsprechende Abhilfe kann getroffen werden. Falsch dimensionierte Mittellager, oder defekte und ausgeschlagene Lager und Gelenke sind leicht zu erkennen. Schwingungsgeräusche in Achsverlängerungen oder anderen Aufhängungsteilen werden nachgewiesen. Also alles in allem steht ein gutes Hilfsmittel zur Verfügung, das die bisherige subjektive Beurteilung mit der neuen Messmethode ersetzt und somit Fehldiagnosen verhindert.

Ein weiterer Anwendungsfall ist der Einsatz im Anhängerbau. Die heutigen Anhänger unterscheidet man im Wesentlichen in ein- oder zweiachsige Anhänger, wobei die Anhänger entweder gebremst oder ungebremst sind. Die gebremsten Anhänger haben lediglich eine Auflaufkupplung, die beim Auflaufen des Anhängers die Bremse über ein mechanisches Gestänge auslöst. Jedoch besteht nun die Möglichkeit der Überwachung des Anhängers durch Schwingungssensoren. Dadurch ist es möglich, die Schwingwerte des Anhängers von links und rechts zu erfassen. Einzusetzen sind ein-oder zweiachsige Schwingungssensoren. Für den normalen Einsatz reichen die einachsigen vollkommen aus. Die zweiachsigen (x-y Achse) Messsensoren haben den Vorteil, die horizontalen und die vertikalen Schwingungen erkennen zu können. Von den Sensoren sind jeweils einer links und einer rechts am Fahrwerk des Anhängers angebracht. Mit diesen Messwerten lässt sich nun ein intelligentes Anhängergespann verwirklichen. Ein Aufschwingen, sog. Schlingern des Gespanns wird rechtzeitig erkannt. Wäre nun die neue elektrische Keil-Bremse im Anhänger verbaut, könnte jedes Rad gezielt gebremst werden. Dies wäre die Verwirklichung des ESP im Anhängerbau. Wird nun noch eine Auswerteelektronik im Zugfahrzeug untergebracht, die zusätzlich einen weiteren Schwingungssensor enthält, so wäre eine weitere Innovation realisierbar, nämlich eine Beurteilung der Anhängerlast. Bisher ist eine Gewichtsmessung des Anhängers über sog. Waageelemente möglich. Jedoch sind diese relativ teuer und es muss an allen aufliegenden Fahrwerks- und Rahmenteilen je ein Element angebracht werden. Diese einzelnen Werte müssen dann zum Gesamtgewicht addiert werden.

Über die Schwingungsmesstechnik besteht nun folgende Möglichkeit: Der Anhänger wird beim Anstecken des Steckers am Zugfahrzeug kodiert. Das heißt die Auswerteelektronik erkennt, welcher und was für eine Ausführung von Anhänger angesteckt ist. Für diesen Anhängertyp sind nun Werte in der Steuereinheit abgelegt und werden im Fahrbetrieb ständig verglichen. So sind bei einem leeren Anhänger grundsätzlich die Werte höher als bei einem vollen Anhänger. Der Anhänger neigt zum Springen bei schlechter Fahrbahn. Bei voller oder zunehmender Beladung wird das Fahrverhalten ruhiger. Bei überladenem Anhänger geht die Fahrweise in ein Schlingern über. Dies wird sogleich erkannt und wieder über den gezielten Bremseneingriff geregelt. Werden die Werte zu niedrig und die Schlingerwerte zu groß, ist eine Überladung oder Falschbeladung des Anhängers gegeben. Dies kann nun dem Fahrer über die Instrumentierung angezeigt werden. Im ungünstigsten Fall kann eine Einschränkung der Verfügbarkeit stattfinden. Das heißt nach einem Stopp mit Motor Aus, wird eine Weiterfahrt mit entsprechender Anzeige verhindert. Dadurch werden Fahrten mit überladenen und/oder verkehrsunsicheren Gespannen verhindert. Das gleiche Szenario kann für LKW-Anhänger zugrunde gelegt werden. Auch hier ist die moderne und neue Messtechnik mit Erfolg einzusetzen.

Eine weitere Ausführungsvariante der erfindungsgemäßen Messanordnung bzw. des erfindungsgemäßen Verfahrens wird nachfolgend noch erläutert. Ergänzend bzw. alternativ zu der oben erwähnten Schwellenmessung - Überfahren von nacheinander folgenden Schwellen - besteht auch die Möglichkeit, das Fahrzeug, ähnlich wie bei der Bremsenprüfung, in einen Schwingungsprüfstand zu fahren. Dieser funktioniert wie ein bekannter Bremsenprüfstand, jedoch ist auf der Rolle wenigstens eine Schwelle eingebaut. Das heißt, mit jeder Umdrehung wird das Rad und somit das Federbein bzw. die Fahrzeugseite angehoben und wieder gesenkt. Dadurch wird das Federbein bzw. der Stoßdämpfer in der Druck- und Zugstufe eingeschoben und wieder entlastet. Je höher die Schwelle und umso kürzer diese ist, desto höher ist die Genauigkeit der Messung. Ein defekter Stoßdämpfer fällt hier ebenso auf wie bei der Schwellenüberfahrt, da die Messwerte sofort Auffälligkeiten zeigen. Der Test beginnt sinnvollerweise links vorn, dann auf der rechten Seite. Nun folgen wie auch bei der Bremsenprüfung das Herausfahren der Vorderräder und das Einfahren der Hinterräder. Danach folgt die gleiche Testreihenfolge wieder links, dann rechts. Nun sind alle vier Räder getestet und das Ergebnis der Fahrwerksmessung liegt nach der Auswertung vor.

Möglicherweise besteht die Möglichkeit, dieses Verfahren in den bisher bekannten Bremsenprüfstand zu integrieren. Dazu muss mechanisch die Möglichkeit geschaffen sein, dass die Stoßdämpferprüfschwelle in der Rolle ein- und ausfahrbar ist. Dadurch könnten alle bestehenden Rollenbremsenprüfstände nachgerüstet werden. Außerdem beseht ja schon die Messmöglichkeit die Stoßdämpferprüfung, die nur das Einfahren in den Bremsenprüfstand nützt, noch um die Schwellenmessmethode zu ergänzen.

Die Messsensoren sind für die Messungen an verschiedenen Stellen zu montieren. Die Saugfüße sind in Sekunden angebracht und auch abgenommen. Wenn die Rollen einzeln laufen, besteht die Möglichkeit der Verwendung nur eines Sensors auf dem Dach. Aber auch die Möglichkeit mit zwei Sensoren an den vorderen Kotflügeln - über der Radmitte - ist natürlich in der Lage, genauere Messungen zu produzieren. Genauso besteht die Möglichkeit, die beiden Sensoren an der Fahrzeugmitte - also an den B-Säulen -zu installieren. Um die Messung zu realisieren, sind vier Sensoren jeweils an den entsprechenden Kotflügeln zu befestigen und dadurch jeweils alle Messergebnisse von dem jeweiligen Federbein zu bekommen. Je nach Anwendungsziel sind die Methoden - ein Sensor - zwei Sensoren - vier Sensoren - Messung auszuwählen. Für eine Fahrzeugüberprüfung im Rahmen einer Hauptuntersuchung ist die Ein-Sensor-Methode sehr günstig, weil einfach und schnell zu realisieren; ganz genaue Ergebnisse sind hierbei nicht zwingend erforderlich. So reicht hier die Auswertung mit der Ampelfunktion- Rot-Gelb-Grün. Für die Fahrzeugentwicklung und den Einsatz bei Tests oder im Motorsport sind dann die 2er- und 4er-Sensormessungen natürlich von Vorteil.

Eine weitere Einsatzmöglichkeit ist die Fahrzeugüberwachung im Leistungsprüfstand. Bisher wird ein Fahrzeug in den Leistungsprüfstand gefahren ohne Überwachung ob an dem Fahrzeug alle mechanischen Teile in Ordnung sind. Durch den Einsatz der Sensoren kann der Zustand der einzelnen Komponenten überwacht und bei Gefahr der Prüfstand abgeschaltet und die Messung abgebrochen werden, ohne das das Fahrzeug Schaden nimmt. So sind Messsensoren an jedem Kotflügel sinnvoll. Dadurch wird die gesamte Radaufhängung incl. Rad und Reifen überwacht. Zusätzlich ist es sinnvoll, einen weiteren Sensor am Motor anzubringen um Werte zu erfassen, wenn der Motor bei der Leistungsmessung in bedenkliche Zonen vorstoßen sollte. Auch hier erfolgt ein Messabbruch. Weiterhin sind natürlich denkbare Messstellen am Zylinderkopf, Motorblock, Getriebe, Differential und an allen Stellen die beansprucht werden, bzw. wo einfach Messwerte ermittelt werden sollen - z.B. bei der Fahrzeugentwicklung. Genauso besteht die Möglichkeit den Leistungsprüfstand selber zu überwachen, indem in die Rollenlager jeweils ein Sensor eingebaut wird. Dadurch werden Schäden am Prüfstand frühzeitig erkannt und Schäden verhindert.

### Figurenbeschreibung

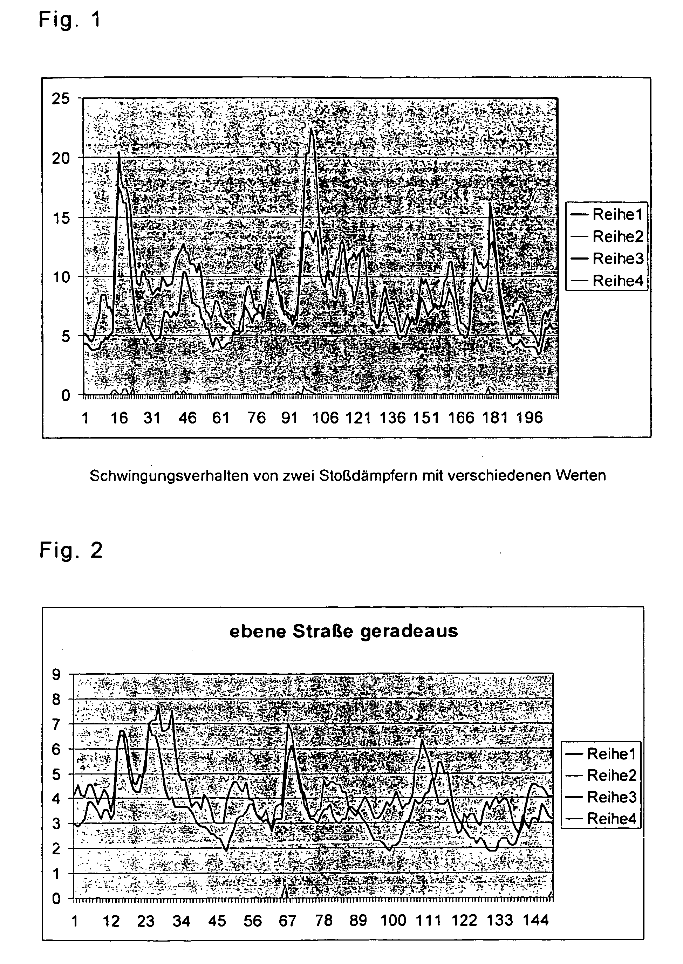

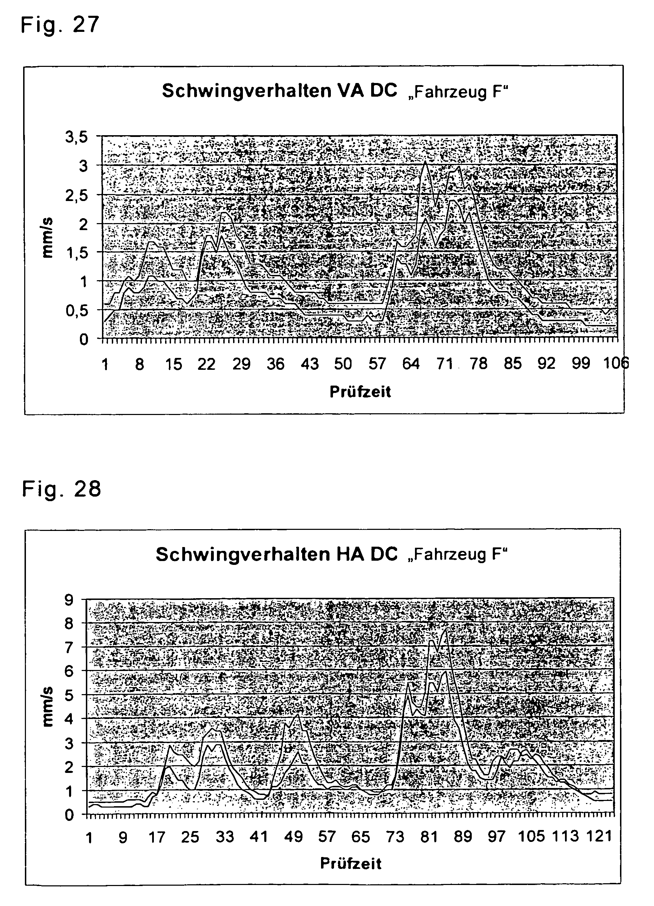

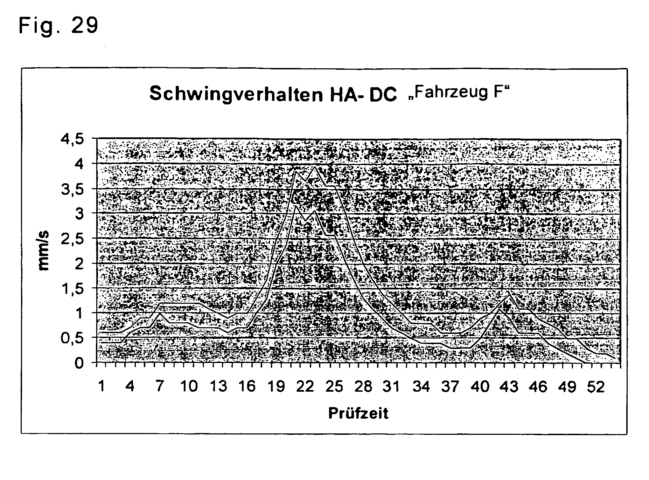

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt, in denen die Figuren 1 bis 29 in verschiedenen Diagrammen unterschiedliche Schwingungseffekte von untersuchten Strukturabschnitten verdeutlichen.

Das Diagramm der Fig. 1 zeigt in qualitativer Weise das Schwingungsverhalten von zwei Stoßdämpfern mit jeweils verschiedenen Kennwerten. Hierbei wird anhand der unterschiedlich starken Ausschläge deutlich, dass aus derartigen Kurven der Zustand der Stoßdämpfer abgeleitet werden kann. Da die Aufbauschwingungen der Fahrzeugkarosse gemessen werden, führen Stoßdämpfer mit reduzierter Wirkung zu ausgeprägten Aufbaubewegungen. Diese können mittels der erfindungsgemäßen Messanordnung erfasst werden.

Durch Erstellung von Messreihen mit mehreren (Neu-) Fahrzeugen, werden Anhaltswerte erzielt, die dann als Grenzwerte +/- für eine Fahrzeugbewertung dienen. Somit ist sofort erkennbar welche Komponenten im sog. "Grünen Bereich" liegen und welche verschlissen sind und ausgetauscht werden müssen.

Die Diagramme der Figuren 2 bis 4 verdeutlichen die Möglichkeit, wahlweise den Fahrbahnzustand und/oder den Stoßdämpferzustand des Fahrzeugs beurteilen zu können. Durch die Anbringung des Beschleunigungssensors unten am Fahrwerk kann bspw. der Fahrbahnzustand gemessen werden. Die Übertragung der Fahrbahnunebenheiten an den Fahrzeugaufbau erfolgt durch den Fahrbahnkontakt der Reifen. Somit ist durch Vergleichsmessungen auch eine Beurteilung von verschiedenen Reifen möglich. Genauso verändert ein anderer Luftdruck das Schwingverhalten und somit die Messergebnisse.

Durch Messung am oberen Befestigungspunkt des Federbeins können dann die Einflüsse wie Fahrbahnzustand oder Reifendruckänderung, andere Reifengröße und andere Achseinstellungen festgestellt werden. Das bedeutet, dass mit diesem System ein Fahrzeug optimal vermessen und eingestellt werden kann. Diese Messmöglichkeit bietet Vorteile bei Fahrwerken mit einstellbaren Stoßdämpfern, die bisher nur relativ grob auf passende und gleiche Werte links und rechts eingestellt wurden. Im Motorsport ist dies eine gute Voraussetzung für ein passend eingestelltes Fahrwerk, wodurch die Vorbereitung erleichtert und verbessert wird.

So zeigt das Diagramm der Fig. 2 in qualitativer Weise mögliche Messkurven des Fahrzeugaufbaus bei ebener Straße und Geradeausfahrt. Bei einem optimal eingestellten Fahrwerk sollten beide Sensorkurven ziemlich deckungsgleich verlaufen. Größere Abweichungen lassen unterschiedlich wirkende Komponenten wie defekte oder sich verändernde Leistungswerte sofort erkennen.

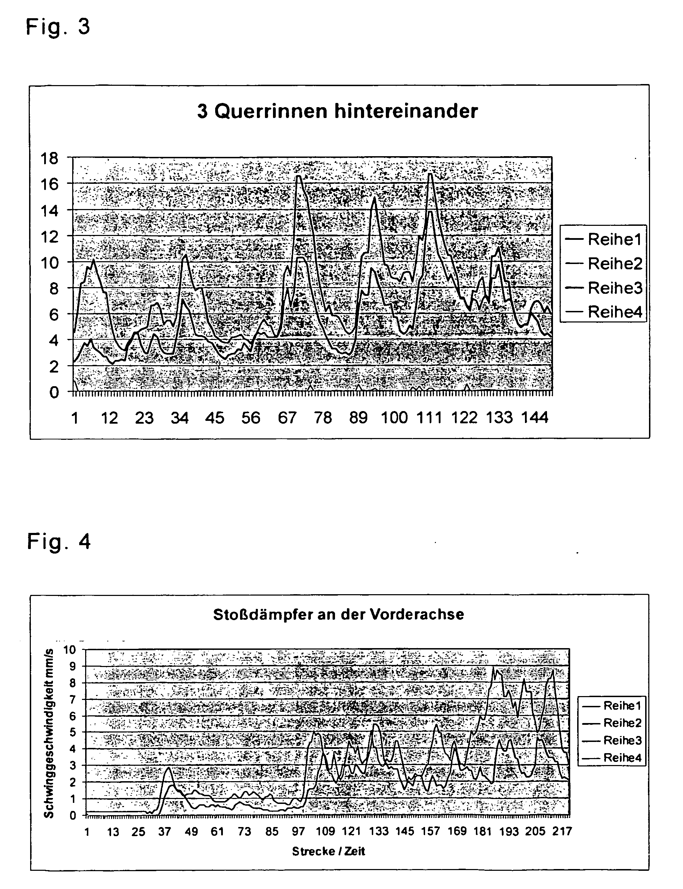

Das Diagramm der Fig. 3 verdeutlicht die Möglichkeit der Erfassung der Fahrbahnbeschaffenheit. Hier zeigt die Messung das Überfahren von drei Fahrbahnmarkierungen vor einer Kreuzung. Dabei ist wieder deutlich zu sehen, dass der linke Stoßdämpfer bereits schlechter arbeitet als der rechte. Das Diagramm der Fig. 4 verdeutlicht nochmals das Schwingungsverhalten des Aufbaus im Bereich der Vorderachse, wodurch sich das Dämpfungsverhalten der Stoßdämpfer an der Vorderachse beurteilen lässt.

Durch die Möglichkeit des Einsatzes einer Vielzahl von Sensoren, je nach Messkonfiguration bspw. von bis zu 18 Sensoren, besteht die Möglichkeit der Überwachung von allen nur erdenklichen Messstellen. Durch zusätzliche Messeingänge, bspw. Analogeingänge, können z.B. zusätzliche Temperaturfühler angeschlossen werden. Damit ist die Überwachung der Stoßdämpfertemperatur oder der Temperaturen an den Bremsen bzw. den Bremssätteln problemlos möglich. Durch die weitere Möglichkeit, Drehzahlen zu erfassen, können bspw. die Motordrehzahl und/oder die Raddrehzahlen aufgezeichnet werden. Damit ist eine weitere Möglichkeit geschaffen, um Einflüsse des Antriebs auf das Fahrwerk bzw. auf das Fahrverhalten oder umgekehrt zu erkennen und zu erfassen.

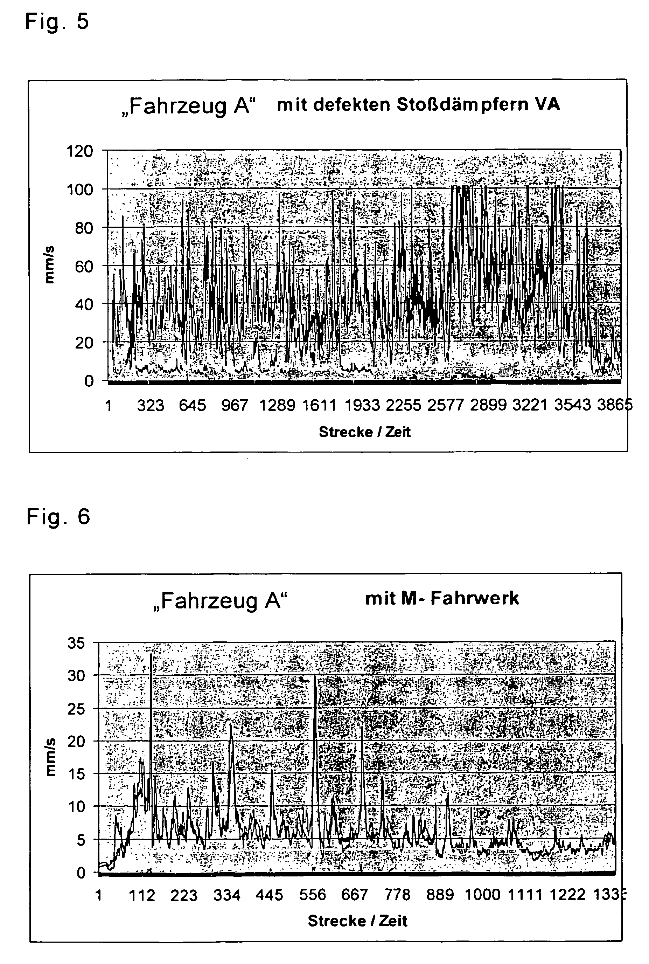

Ein besonderer Vorteil der erfindungsgemäßen Anordnung bzw. des erfindungsgemäßen Verfahrens besteht darin, dass Fehler leicht erkannt werden können. So können bspw. defekte Stoßdämpfer relativ leicht erkannt und identifiziert werden. Das Diagramm der Fig. 5 verdeutlicht ein typisches Messbeispiel anhand eines Fahrzeugs ("Fahrzeug A"), eines relativ kompakten PKW mit relativ hoher Laufleistung. Das Fahrzeug hat im gezeigten Ausführungsbeispiel eine Laufleistung von ca. 250.000km und war beim Fahrtest zwar etwas weich, aber nicht als unfahrbar oder gar gefährlich erkannt worden. Bei der regelmäßigen technischen Überwachung sind keine Auffälligkeiten festgestellt worden, so dass keine Bedenken hinsichtlich der Verkehrssicherheit bestanden Jedoch zeigen die Messwerte, dass beide Stoßdämpfer defekt und stark verschlissen sind. Dabei zeigt der linke Stoßdämpfer Werte, die zu noch größeren Aufbauschwingungen führen. Beim anschließenden Umbau und der nachfolgenden Untersuchung der Federbeine wurden die Messwerte voll bestätigt. Der linke Stoßdämpfer war noch wesentlich stärker geschädigt als der rechte.

Das Diagramm der Fig. 6 verdeutlicht den Zustand ("Fahrzeug A") nach Umbau auf ein originales Sportfahrwerk mit kürzeren und strafferen Federn sowie mit Stoßdämpfern mit strafferer Kennung. Hierbei zeigte sich ein völlig verändertes Schwingungsverhalten des Aufbaus, wie es dem gewünschten Zustand entspricht. Das Handling war stark verbessert und das Fahrzeug zeigt ein insgesamt neutrales Fahrverhalten. Das Fahrwerk zeigt völlig veränderte Eigenschaften. Zudem sind die niedrigeren Schwingungsamplituden der Stoßdämpfer zu erkennen, so dass Stöße und Schlaglöcher besser gedämpft werden. Allerdings sind auch die härten Kennwerte des M-Fahrwerks zu sehen. Beide Dämpfer zeigen nahezu gleiches Verhalten, befinden sich also im neuwertigen Zustand.

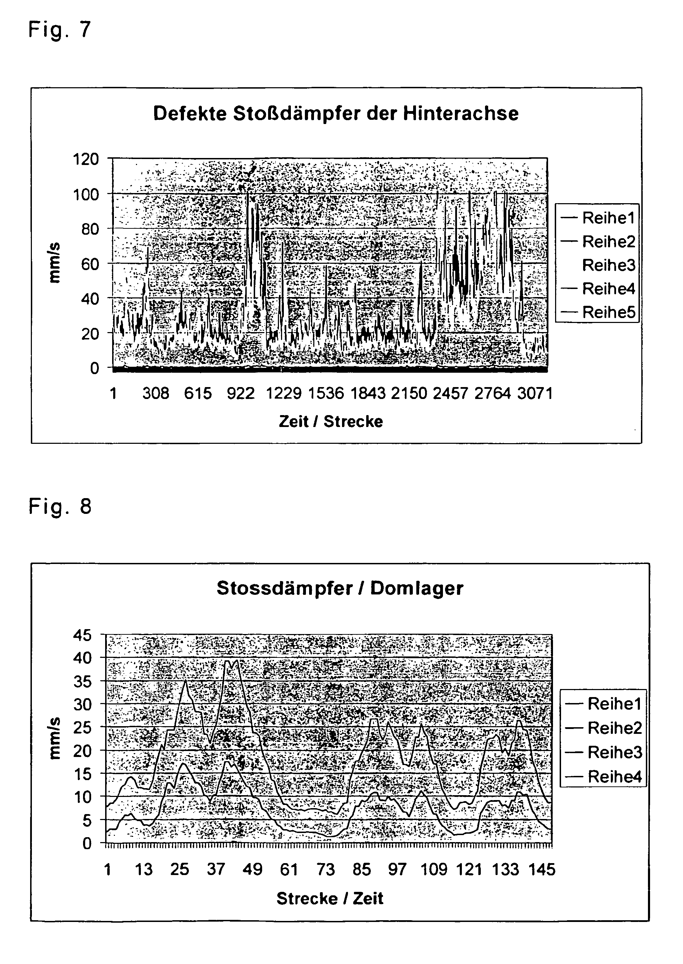

Das schematische Diagramm der Fig. 7 verdeutlicht nochmals die gemessenen Aufbauschwingungen bei defekten Stoßdämpfern an der Hinterachse.

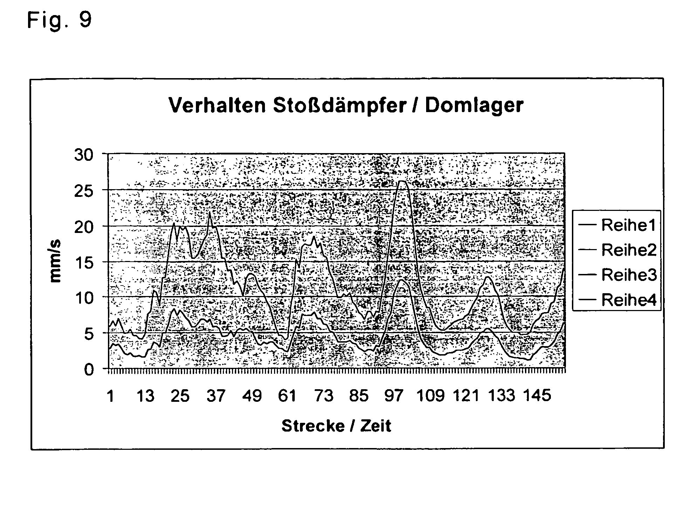

Eine weitere Anwendungsmöglichkeit ist die Messung der Aufbauschwingungen im Bereich der Domlager der Federbeine, was anhand der Diagramme der Figuren 8 bis 10 verdeutlicht wird. Die roten Kurven der Figuren 8 und 9 zeigen jeweils die Restschwingung, die am oberen Befestigungspunkt des Stoßdämpfers anliegt. Die blaue Kurve zeigt die Schwingung, die nach dem Domlager an die Karosserie abgeben wird. Das Verhältnis der Schwingungsamplituden beträgt ca. 1:3. Die Rote Kurve stellt das Schwingverhalten des Stoßdämpfers dar. Die blaue Kurve zeigt den Rest der Schwingung, die noch nach der Dämpfung des Domlagers ankommt. Somit kann die Dämpfung des Domlagers gemessen werden. Der Kurvenverlauf ist exakt gleich, bis auf die Dämpfungshöhe.

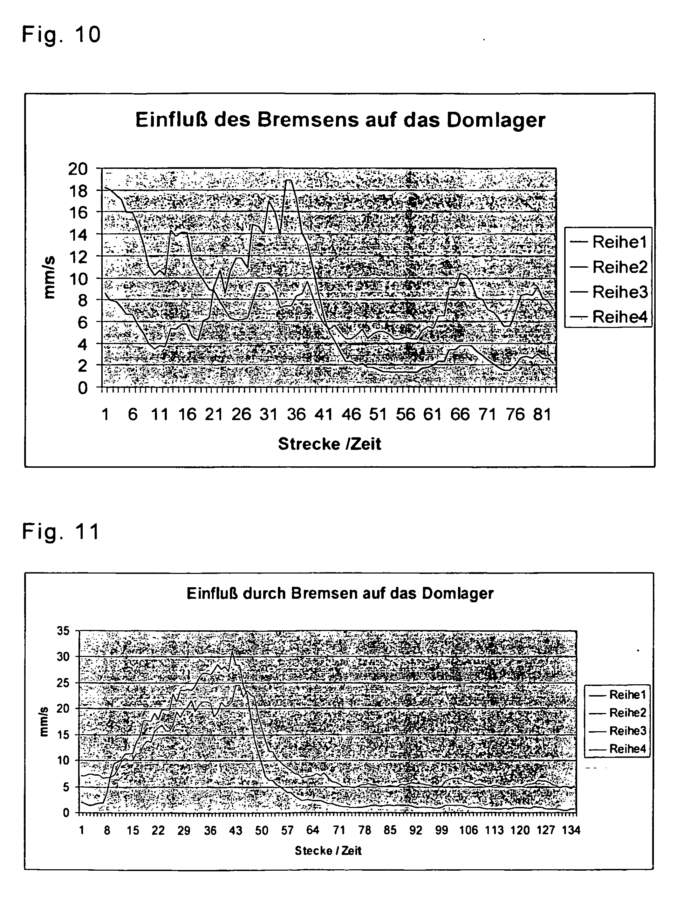

Das Diagramm der Fig. 10 zeigt das Verhalten der Schwingungen beim Bremsen. Beim Bremsen wird das Domlager jedoch mehr belastet als der Stoßdämpfer. Die Werte für die Schwingamplituden steigen im Bereich des Domlagers an, während sie beim Stoßdämpfer zurückgehen. Beim Bremsvorgang steigen die Schwingwerte des Domlagers an, während die des Stoßdämpfers abfallen. Bei jedem Bremsdruck steigt, wie in Fig. 11 abgebildet, die Kurve an, um beim Lösen der Bremse gleich wieder abzufallen. Hier ist eine so genannte Stotterbremse abgebildet, wobei im Beispiel 5-maliges Bremsen darstellt ist (blaue Kurve).

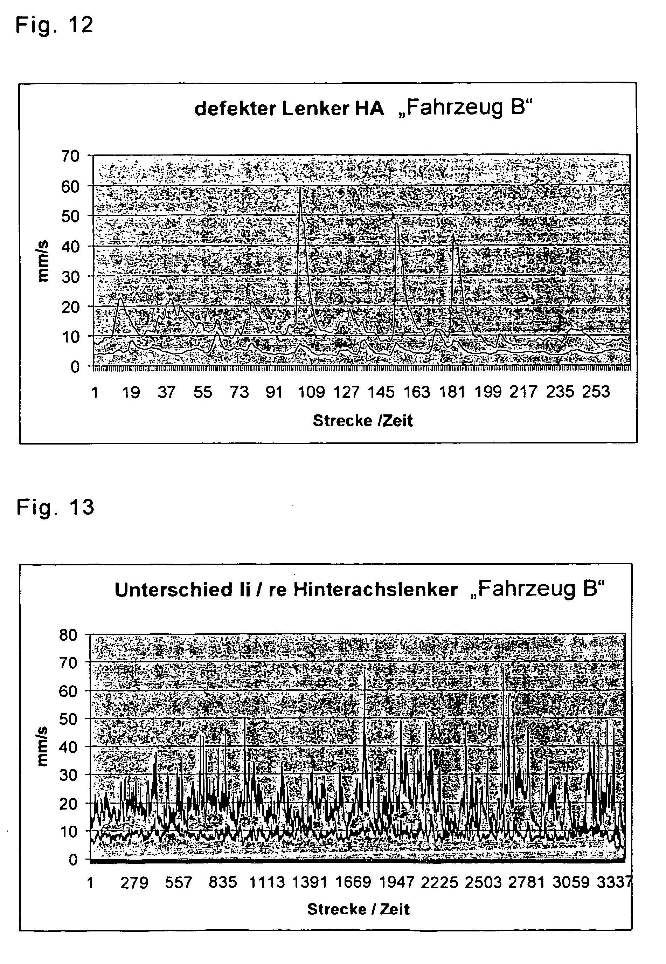

Weiterhin lassen sich mit Hilfe der erfindungsgemäßen Messmethode defekte Gelenke und Lenker am Fahrwerk analysieren und lokalisieren. Das Diagramm der Fig. 12 zeigt bspw. anhand eines weiteren PKW ("Fahrzeug B") einen ausgeschlagenen Führungslenker an der Hinterachse eines Fahrzeugs. Beim Fahrverhalten ist nichts festzustellen. Das Messverfahren ermöglicht allerdings eine Lokalisierung des defekten Lagers, so dass gezeigt werden kann, dass schon kleine Änderungen im Aufbauverhalten und Schwingungsverhalten und die zu Grunde liegenden Verschleißspuren erkannt werden können. Die Schwingungsamplituden und Beschleunigungen des Aufbaus in Nähe eines ausgeschlagenen Lenkers steigen gegenüber einem fehlerfreien Lenker stark an. Der fehlerfreie Lenker liefert Pegelwerte um 10mm/s, während im Bereich des defekten Lenkers Werte von bis zu 60 ... 70 mm/s erreicht werden.

Das Diagramm der Fig. 13 zeigt wiederum anhand des "Fahrzeugs B" beispielhaft die unterschiedlichen Aufbaubeschleunigungen im Bereich eines linken und rechten Hinterachslenkers. Hierbei ist sofort ersichtlich, dass der rechte Führungslenker mit sehr niedrigem Niveau belastet ist. Der linke jedoch ist vom Grundniveau schon doppelt so hoch belastet und poltert bei Stößen und Schlaglöchern. Die Beschleunigungswerte erreichen Größenordnungen von bis zu 70mm/s. Ein Defekt ist hier sofort eindeutig zu erkennen.

Die folgenden Diagramme verdeutlichen die Möglichkeiten einer Schwingungsüberwachung in verschiedenen Ebenen. Durch das Anbringen von zwei Sensoren am vorderen Stoßdämpferdom, ist es möglich das Schwingverhalten der Vorderachse bzw. des Federbeins in Längs- und Querrichtung zu erfassen. Damit lassen sich exakt die Lenkbewegungen erfassen. Durch direkten Vergleich von Messergebnissen der linken Seite zur rechten Seite sind Rückschlüsse auf die Achsgeometrie zu erzielen.

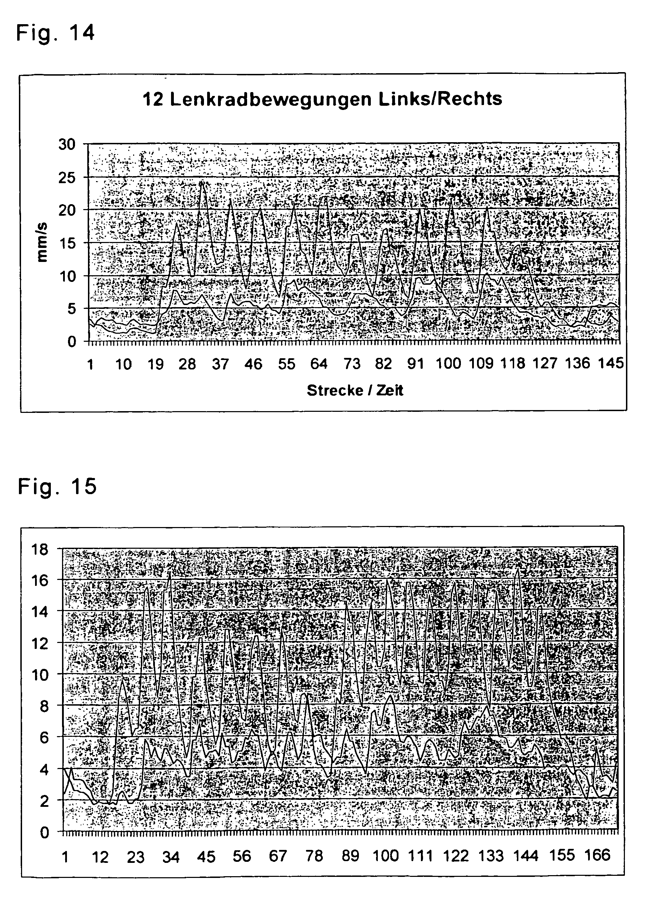

Das schematische Diagramm der Fig. 14 zeigt bspw. das Schwingungsverhalten bei zwölf Lenkradbewegungen in linker und rechter Richtung. Die rote Diagrammlinie verdeutlicht die Querrichtung. Es sind alle zwölf Lenkwinkeländerungen dargestellt; in der Längsrichtung sind jedoch nur sechs Änderungen zu erkennen.

Das weitere Diagramm der Fig. 15 zeigt sehr kurze Lenkbewegungen, die an dem kleineren Schwingwert zu erkennen sind.

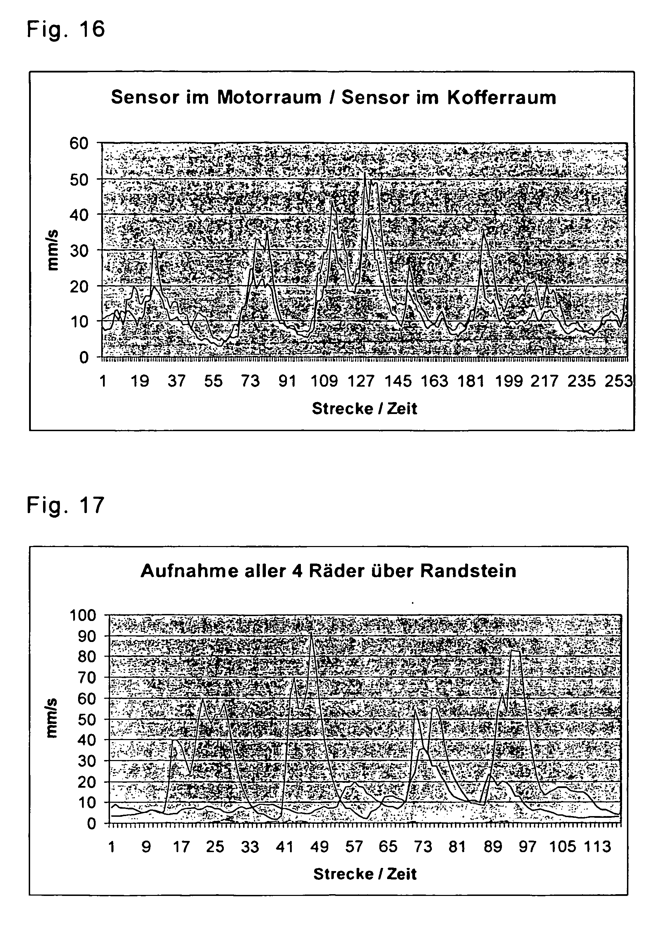

Eine weitere Möglichkeit der Beurteilung des Schwingungsverhaltens des Fahrzeugs besteht in einer Sensorüberwachung durch zwei Sensoren. Durch den Einsatz je eines Sensors im Motorraum und im Heckbereich des Fahrzeugs lassen sich der Vorderwagen und das Heck des Fahrzeugs komplett und getrennt voneinander beurteilen. Jeder der Sensoren erfasst alle Schwingwerte; zusätzlich kann ein Gesamtschwingwert ermittelt werden. Das folgende Diagramm der Fig. 16 verdeutlicht, dass die Schwingwerte im Heck des Autos größer sind als die im Vorderwagen. Bei dem Fahrzeug ist ein defekter Lenker an der Hinterachse vorhanden, wodurch die dadurch erhöhten Schwingwerte den Gesamtwert erhöhen. Wird der Lenker anschließend gewechselt, werden die Werte unter die Werte der Vorderachse sinken. Auf die beschriebene Weise sind eine sehr schnelle Fehlerdiagnose und eine Beurteilung des Fahrzeugzustands ermöglicht.

Die rote Diagrammlinie bildet die Messwerte des Sensors im Kofferraum bzw. im Heckbereich des Fahrzeugs ab. Es ist einmal ersichtlich, dass bei ebener Straße und somit ohne Anregung des Fahrwerks die beiden Sensoren den gleichen Wert anzeigen. Beim Durchfahren von Schlaglöchern ist der Ausschlag des hinteren Sensors am hinteren Dämpfer größer, was durch den defekten Lenker bedingt ist.

Das Diagramm der Fig. 17 zeigt weiterhin ein Kraftfahrzeug mit einem Federbruch an der Vorderachse. Das Fahrzeug wird schräg über einen Bordstein gefahren, so das zuerst das linke Vorderrad, dann das rechte Vorderrad und dann das linke Hinterrad und zuletzt das rechte Hinterrad über den Bordstein fährt. Es lässt sich gut das Nachschwingen der Karosserie durch den Federbruch erkennen.

Durch diese Möglichkeit des Einsatzes von nur einem Schwingungssensor ist eine Überwachung von großen und/oder komplexen Fahrzeugen und Strukturen gegeben. Dieser Sensor ermöglicht die Erfassung aller Schwingungen oder Geräusche des gesamten Bauteils.

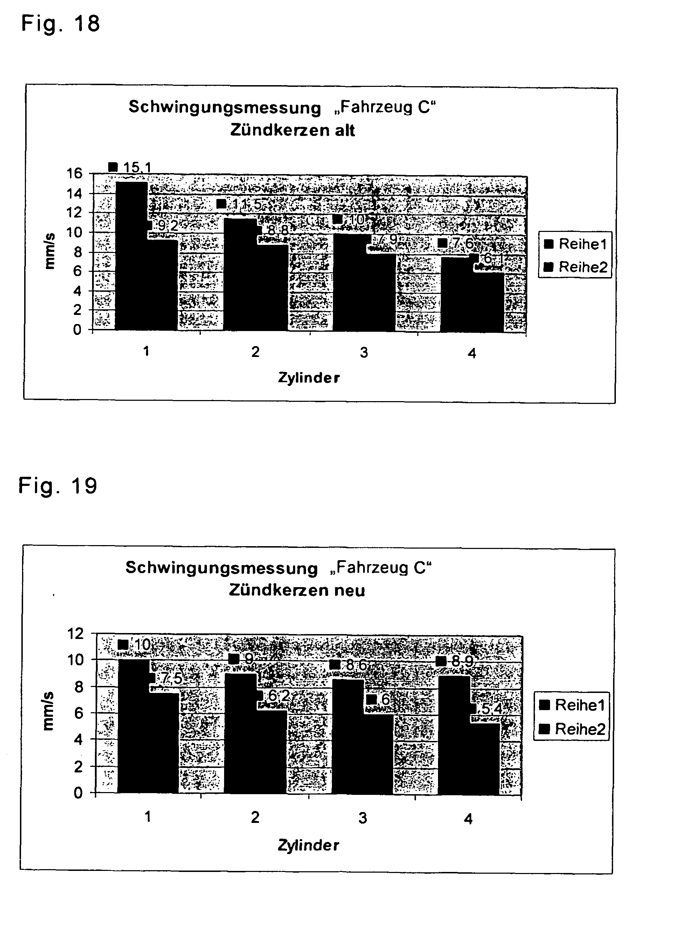

Eine weitere vorteilhafte Variante des erfindungsgemäßen Verfahrens besteht in der Möglichkeit, Messungen an Motoren durchzuführen. Mit der Schwingungsmessung können natürlich auch Messungen an Verbrennungsmotoren, wie auch an Elektromotoren vorgenommen werden. Damit sind auf einfache Weise sehr schnell Schäden zu lokalisieren. Durch die Verbrennungsgeräusche ist es sogar möglich, anhand der Schwinggeschwindigkeitswerte eine Aussage zu treffen, wie der Zustand der Verbrennung ist. So ist der Zustand der Zündkerzen zu erkennen und das bestätigt sich nach dem Wechsel und einer erneuten Messung. So ist in den beiden nachfolgenden Diagrammen der Figuren 18 und 19 gezeigt, wie durch Austausch der Zündkerzen die Schwingwerte von 15 mm/s (Fig. 18) auf 10 mm/s (Fig. 19) zurückgegangen sind. Gemessen wird hier anhand eines Verbrennungsmotors eines "Fahrzeugs C".

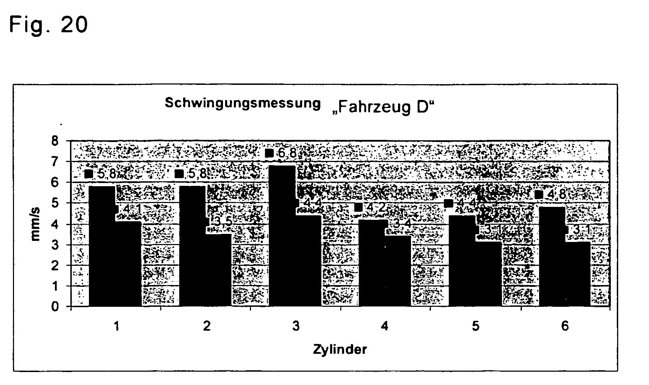

Genauso kann gemessen werden, wie sich der Motor im kalten oder im warmen Zustand verhält. Auch lassen sich die Werte für die Zusatzaggregate ermitteln. So z.B.: die Lichtmaschine, der Klimakompressor und die Servopumpe. Dabei besteht sogar die Möglichkeit den Lagerzustand zu überprüfen. Dies geschieht durch die Ermittlung der sog. gSE - Werte. Interessant ist dazu auch der Vergleich von den verschiedensten Motorentypen, da bekannt ist, dass ein Motor mit sechs Zylindern wesentlich ruhiger läuft als ein Motor mit vier Zylindern. Diese Gegenüberstellung wird anhand des Diagramms der Fig. 20 anhand eines weiteren PKW ("Fahrzeug D") verdeutlicht.

Wenn die oben erwähnten Erfahrungswerte vorliegen, können die Prinzipien bspw. auch auf das Triebwerk eines Flugzeugs übertragen werden. Derartige Flugzeugtriebwerke zeigen Schwingungswerte von ca. 40 mm/s. Wenn sich dieser Wert nach einer gegebenen Gebrauchsdauer auf einen Wert von 55 mm/s erhöht, so ist von einer normalen Verschlechterung auszugehen. Treten aber plötzlich Werte auf, die im Bereich von 100 mm/s und mehr liegen, ist sofortiger Handlungsbedarf gegeben. Im Bereich der normalen Alterung wird beim Service des Triebwerks und durch Austausch der verschlissenen Teile wieder der alte Wert von ca. 40mm /s erreicht. Beim plötzlichen Anstieg ist ein außergewöhnlicher Defekt erkannt, so dass die Leistung und die Drehzahl des Triebwerk umgehend zu reduzieren ist, bis die Werte wieder auf annähernd normale Werte zurückgehen. Ggf. muss das Triebwerk abgeschaltet werden. Dies gilt natürlich für alle anderen Antriebsarten genauso. So kann diese Überwachung überall eingebaut werden vom Schiffsdiesel bis zur Jetturbine.

Generell ermöglicht das erfindungsgemäße Verfahren bzw. die erfindungsgemäße Anordnung die Erfassung und Aufzeichnung des Schwingungs- und des Federverhaltens von bewegten Systemen wie Antriebe, Fahrzeuge etc. Durch die Anbringung von zwei Schwingungssensoren ist es möglich, ein ganzes Fahrwerk zu überwachen. Durch die Übertragung der Karosserieschwingungen würde sogar nur ein einzelner Sensor ausreichen. So sind neue Einsatzmöglichkeiten im Bereich der Schiene, Straße, Wasser- und Luftverkehr realisierbar.

Zum Beispiel ist mit einem zentral am Fahrzeugboden eines Eisenbahnwagons platzierten Schwingungssensors die Überwachung beider Drehgestelle und aller einzelnen Räder realisierbar. Der Wagon überfährt bspw. eine Weiche. Es rollt zuerst das linke Rad des vorderen Drehgestells, dann das rechte Rad in die Trennfuge der Schiene. Dieser Schlag wird vom Sensor sofort registriert und in der Auswerteschaltung abgespeichert. Sind die gemessenen Werte größer als vorgegebene, hinterlegte Grenzwerte, kann eine Fehlermeldung ausgegeben bzw. abgespeichert werden. Es kann sein, dass entweder ein Fehler an den Achsen vorliegt oder dass die Toleranzen der Weiche im Bereich der Schienen nicht mehr den Vorgaben entsprechen bzw. zulässige Toleranzwerte überschritten haben. Wenn die Anzahl der Fehlermeldungen größer wird, kann dies bspw. auch zur Abschaltung bzw. Verhinderung der Weiterfahrt des Zuges genutzt werden.

Durch die Überwachung der Schwingungen in allen Bauteilen ist dies ein gewaltiges Potential der Einsatzmöglichkeiten, mit der Veränderungen sofort im Betrieb erkannt werden und dadurch eine zustandsorientierte Wartung eingeführt werden kann.

Die erfindungsgemäße Anordnung bzw. das erfindungsgemäße Verfahren entsprechend einer der obigen Ausführungsvarianten ermöglicht es, dass in Zukunft Bauteile und Baugruppen nicht mehr nach Wartungsplan mit Stunden- oder Km - Vorgabe ausgetauscht werden müssen, sondern gezielt nach ihrem Alterungszustand ausgetauscht bzw. ersetzt werden können. Dies spart Kosten und steigert die Betriebssicherheit.

Nachfolgend werden weitere Anwendungsbeispiele für die erfindungsgemäße Anordnung bzw. für das erfindungsgemäße Verfahren erläutert. So wurde bspw. im Rahmen einer turnusmäßigen Fahrzeuguntersuchung, die in vielen Ländern auf Basis gesetzlicher Vorschriften von ausgebildeten Sachverständigen durchgeführt werden, die Praxistauglichkeit des erfindungsgemäßen Verfahrens sowie der entsprechenden Messanordnung untersucht. In Deutschland werden derartige Untersuchungen i.d.R. von Sachverständigenorganisationen wie den Technischen Überwachungsvereinen (z.B. TÜV, DEKRA, KÜS, GTÜ etc.) durchgeführt. Bei diesen als "Projekt Prüfungsstelle (1)" bezeichneten Untersuchungen wurde folgende Aufgabenstellung definiert: Es sollten die Stoßdämpferfunktion an Pkw und Lkw ohne großen messtechnischen Aufwand und ohne allzu große Änderung gegenüber dem bisherigen Prüfablauf gemessen werden. Es war eine einfache Beurteilung des Fahrzeugzustands gefordert. Im Idealfall sollte der Fahrzeugzustand mit dem Ergebnis mit "bestanden" oder "nicht bestanden" charakterisierbar sein. Weiterhin sollte eine Dokumentation bzw. ein Ausdruck der beiden Schwingungsprüfungsergebnisse von Vorder- und Hinterachse ermöglicht werden. Schließlich sollten die Ergebnisse in das Rechnernetzwerk der Prüforganisation übertragen und mitsamt den charakteristischen Fahrzeugdaten (z.B. Kennzeichen des Fahrzeugs) abgespeichert werden, damit ein späterer Zugriff auf die Daten und/oder eine statistische Auswertung ermöglicht werden konnte.

Die Lösung dieses Lastenheftes wurde wie folgt gefunden: Durch den Einsatz von Beschleunigungsaufnehmern konnte das Schwing- Dämpfer-verhalten von Federbeinen / Stoßdämpfer- Federeinheiten überprüft werden. Dazu wurden an den oberen Stoßdämpferaufnahmen / Befestigungen an der Karosserie je ein Schwingungssensor links und rechts mittels Magnetfuß mittig und fest sitzend angebracht. Dies geschieht am besten am Ende der Stoßdämpferkolbenstange, entweder an der Mutter oder der Unterlegscheibe. Der Sensor sollte nicht "kippeln" und mit der Messrichtung nach unten zeigen. Auch sind vorhandene Schraubadapter zu verwenden, die eine sichere und feste Sensorankopplung gewährleisten. Die beiden Sensoren wurden mittels einer geeigneten Auswerteschaltung, bspw. mit einer Messelektronik "DuoVib 1502" verbunden. Die Verbindungen wurden durch einfache und allgemein bekannte BNC- Stecker hergestellt. Dasselbe wurde an der Stoßdämpfer / Federbeineinheit an der Hinterachse durchgeführt.

Jedoch kann es hierbei Probleme geben, da bei vielen modernen Autos die Befestigungspunkte verkleidet und somit nicht zugänglich sind. Diesen Problemen kann abgeholfen werden, indem die beiden Sensoren so weit wie möglich in der Nähe dieser beiden Anlenkpunkte, im Bereich der Seitenwände oder des Kofferraumbodens, angebracht werden. Es ist auch hier darauf zu achten, dass eine feste und ungedämpfte Verbindung zum Karosserieblech des Fahrzeugs hergestellt wird, sich also bspw. keine Dämmmaterialien dazwischen befinden. Die beiden hinteren Sensoren wurden dann ebenfalls mit der Messelektronik "DuoVib 1502" verbunden.

Folgende Auswahl der Messmöglichkeiten ergab sich: Die verwendete Software "MobiControl" hält dafür zwei Arten der Schwingungsüberwachung bereit. Zum einen eine "manuelle" Messung der Fahrwerkszustände und eine "halbautomatische" Messung. Im nachfolgenden wird erst die halbautomatische Messung beschrieben. Beim "Messvorgang Halbautomatik" fährt das verkabelte Prüffahrzeug wie immer vor die Rolle des Bremsenprüfstand. Jetzt wird die Grüne Start-Taste der "Vorderachsmessung" betätigt. Eine blaue "OK"-LED zeigt die Funktionsbereitschaft an. Nun muss zügig in den Bremsenprüfstand mit der Vorderachse eingefahren werden. Dieses Einfahren bedingt ein Eintauchen des Vorderwagens und somit ein Eintauchen der Stoßdämpfer. Bei jedem Bremsvorgang wiederholt sich die Belastung der Stoßdämpfer und auch der Domlager. Dieses Schwingverhalten wird nun über die Beschleunigungsaufnehmer aufgezeichnet. Der gesamte Bremsentest läuft wie immer ab und muss nicht geändert werden. Für den Prüfer ergibt sich nur als neue Tätigkeit das Starten des Überwachungsvorgangs. Das Ende der Aufzeichnung wird über eine grüne LED mit dem Text: "Messung beendet" angezeigt. Falls ein Fehler aufgetreten sein sollte leuchtet eine rote LED auf mit dem Hinweis" Messung wiederholen". Dann muss der Messvorgang nochmals begonnen werden wie zuvor beschrieben.

Das Fahrzeug wird mit der Vorderachse aus dem Bremsenprüfstand heraus gefahren und bevor es mit der Hinterachse auf die Rolle fährt, muss wiederum der zweite Aufzeichnungsvorgang mit der Starttaste "Hinterachsmessung" gestartet werden. Auch hier zeigt eine blaue LED den Aufzeichnungsvorgang an. Jetzt auch zügig in den Bremsenprüfstand einfahren und den Bremsentest wie gewohnt durchführen. Das Ende der Datenspeicherung erfolgt wieder automatisch und wird durch eine zweite grüne LED mit "Messung beendet" angezeigt.

Für die interne Aufzeichnung steht je nach Messauflösung ca. 35 Sekunden, oder 70 Sekunden zur Verfügung. Das bedeutet, dass nach dem Starten auch sofort in den Bremsenprüfstand eingefahren werden muss, um nicht wichtige Messzeit zu verlieren.

Nun werden an dem neben dem Fahrzeug installierten Rechner mit angeschlossenem Drucker die Daten von der DuoVib 1502 Messbox abgefragt. Dies kann bspw. drahtlos über Bluetooth-Datenübertragung erfolgen. Die Daten werden in eine Text-Datei geschrieben und mittels eines Tabellenkalkulationsprogramms (z.B. Excel) geöffnet, anschließend markiert und im Programm als Diagramm geöffnet. Dazu stehen verschiedene Diagrammtypen zur Verfügung. Vorher festgelegte Messwertgrenzen zeigen sofort die Funktion des Fahrwerks an. Ein Überschreiten der Grenzwerte bedeutet einen hohen Verschleiß der Fahrwerkskomponenten, in den meisten Fällen der Stoßdämpfer. Jedoch beeinflussen auch gebrochene Federn oder ausgeschlagene Lenker oder Buchsen das Messergebnis.

Der geübte Anwender kann schnell erkennen, um welche Mängel es sich handelt. Ein entsprechender Text erscheint, entweder "Prüfung bestanden" oder "Prüfung nicht bestanden". Das Messergebnis kann zum einen ausgedruckt werden und zum zweiten werden die Daten von dem geprüften Fahrzeug über das hausinterne Netz abgespeichert. So kann bei erneuter Vorführung des Fahrzeugs, in der Regel wieder nach ein oder zwei Jahren, ein Datenvergleich durchgeführt werden; eine Alterung bzw. ein Umbau, Austausch von Teilen etc. kann leicht erkannt werden.

Anschließend können die verwendeten Sensoren wieder abgebaut werden und stehen für die nächste Messung und das nächste Fahrzeug bereit.

Die alternative Messvariante "Manuell" läuft wie folgt ab: Dazu wird wie zuvor beschrieben das Prüffahrzeug mit den Schwingungssensoren versehen und verkabelt. Der Startvorgang über die Starttaste im Fahrzeug entfällt. Die Datenübertragung vom DuoVib 1502 wird wieder direkt über Bluetooth hergestellt. Dafür werden über die Software MobiControl die Daten der Schwingungsaufnehmer direkt online auf die Festplatte des Rechners bzw. des Notebooks geschrieben. Das bedeutet, dass lediglich die Taste "Daten in Datei schreiben" angewählt werden muss. Jetzt erscheint ein Speicherfenster in dem der Datendatei ein Name zugeordnet werden muss. Dies ist am sinnvollsten das Kfz-Kennzeichen und das aktuelle Datum. Danach startet die Datenaufzeichnung sofort und ist als rot blinkender Button am Bildschirm ersichtlich.

Nun kann die Prüfung des Fahrzeugs beginnen. Es besteht bei dieser Messvariante keine Zeitvorgabe, wie dies bei der halbautomatischen Messung der Fall ist. Die Datenmenge wird nur durch die Festplattenkapazität begrenzt. Nach Beendigung der Prüfung wird die Speicherung durch Anklicken des blinkenden Buttons abgebrochen. Die Daten werden im Excel-Programm geöffnet und können dann wie gewohnt über die Funktion Diagramm weiterverarbeitet und angesehen werden. Dadurch steht eine genauere Beurteilung des Prüffahrzeugs zur Verfügung. Jetzt erfolgt auch die Bewertung in "bestanden" oder "nicht bestanden" und Speicherung und Übertragung der Werte in das Rechnernetzwerk der Überwachungsorganisation.

Anschließend können die vier Sensoren wieder abgebaut werden und stehen für die nächste Messung und das nächste Fahrzeug bereit.

Als Fazit lässt sich ziehen, dass durch die beschriebenen Messmethoden eine genaue Fahrwerksmessung gewährleistet werden kann, da immer in den gleichen Bremsenprüfstand eingefahren wird und somit die Grundvoraussetzungen immer gleich sind. Somit sind die Messergebnisse auch immer miteinander vergleichbar. Ein nennenswerter mechanischer Aufwand ist nicht vorhanden, da der schon vorhandene Bremsenprüfstand als aktives Teil verwendet wird. Lediglich die Erfassungseinheit (vier Beschleunigungsaufnehmer) und die Auswerteeinheit muss zusätzlich mit dem Fahrzeug gekoppelt werden. Der Zeitaufwand hält sich in sehr kleinem Umfang. Die Auswertung und Speicherung erfolgt automatisch und die Datenverwertung mit Ausdruck ist ebenfalls in kurzer Zeit von "jedermann" durchführbar.

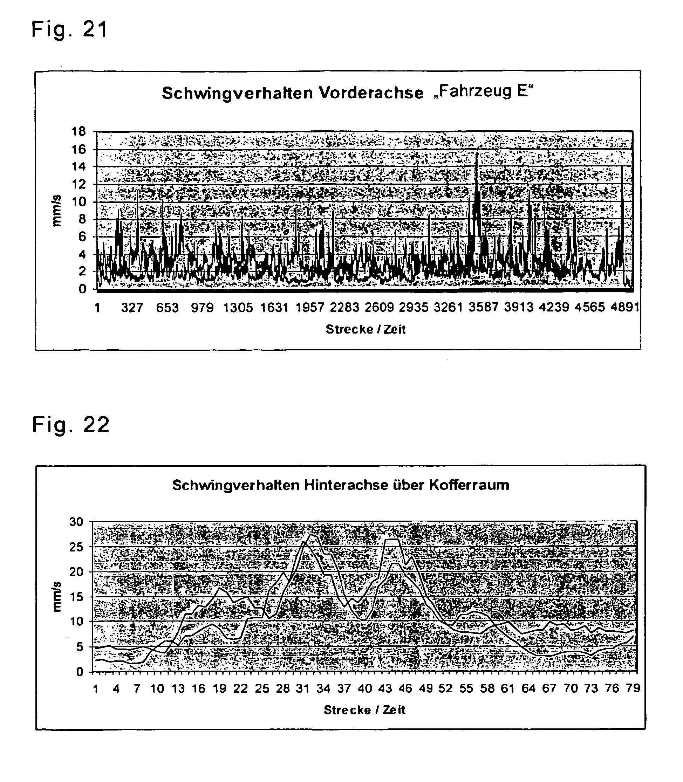

Aus den Diagrammen der Figuren 21 und 22, die beispielhaft das Schwingungsverhalten an der Vorder- und an der Hinterachse eines geprüften Fahrzeugs ("Fahrzeug E") zeigen, lässt sich erkennen, dass die Schwingwerte im Bereich von 5 mm/s bis zu 25 mm/s im regulären Bereich liegen. Werte bis 50 mm/s deuten auf einen möglichen Defekt hin, können aber noch in Ordnung sein. Werte über 70-100 mm/s hingegen zeigen eindeutig einen Defekt an, so dass eine neue Plakette zur Bescheinigung der Verkehrssicherheit des Fahrzeugs zu verweigern ist.

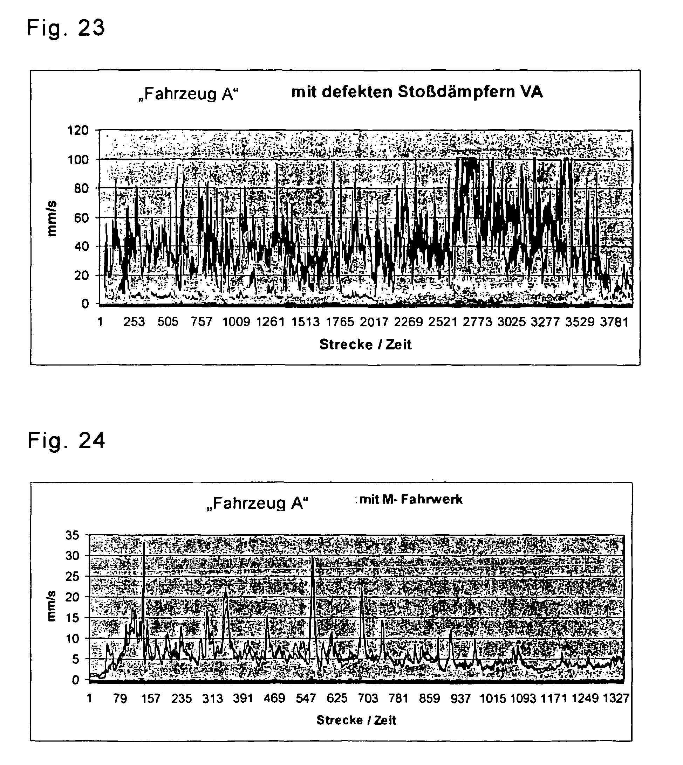

Ein typisches Schwingungsverhalten eines Fahrzeugs ("Fahrzeug A") mit defekten Stoßdämpfern ist bspw. im folgenden Diagramm der Fig. 23 dargestellt. Dieses Diagramm der Fig. 23 zeigt ein normales Fahrwerk mit defekten Stoßdämpfern. Das in Fig. 24 gezeigte Diagramm verdeutlicht das Schwingungsverhalten eines Fahrwerks desselben Fahrzeugs, das mit strafferen Federn und/oder Dämpfern versehen ist.

Bei diesen Versuchen im Rahmen von Verkehrssicherheitsprüfungen wurde ein mobiles Messsystem für Fahrwerksmessungen in Prüffahrzeugen verwendet. Das Gehäuse kann bspw. ein ABS-Kunststoffgehäuse mit Bedien- und Signalelementen in der Frontplatte sein. Die Stromversorgung erfolgt typischerweise über eingebaute Akkus. Zusätzlich kann ein Netzteil (220 / 24 V) in der Basis-Station vorgesehen sein. Für die Signalauswertung eignet sich bspw. ein Programm "DuoVib 1502" für insgesamt 4 Beschleunigungsaufnehmer, wobei die Datenübertragung zur Basisstation über den sog. Bluetooth-Standard erfolgen kann. Die Reichweite beträgt hierbei ca. 10m. Als Sensoren können Beschleunigungsaufnehmer Al 100.012.040 verwendet werden, die eine Empfindlichkeit von ca. 100 mV/g +/- 10%, einen Messbereich bis max. 50g, einen Frequenzbereich zwischen 0,5 - 10.000Hz +/- 3dB mm/s und 5000 - 50.000 Hz für Spike-Energy-Messungen gSE aufweisen. Die Stromversorgung kann 2-10 mA und + 18V - 28VDC aufweisen. Der Temperaturbereich liegt bei ca. -40 ... +80°C, wobei die Kabel Temperaturen bis 200°C ausgesetzt werden können. Das Gewicht eines Sensors beträgt ca. 5 Gramm bei einer Kabellänge von 4 mm und der Verwendung eines Kabels, 2-adrig abgeschirmt, 2,7mm FEP-Teflon-Isolierung. Die Verbindung zum Rechner bzw. die PC- Anbindung erfolgt über eine Blootooth- Datenübertragung zur Basisstation. Als Basisstation eignet sich grundsätzlich jeder tragbare oder stationäre Personal-Computer, wobei sich insbesondere sog. PC- Notebooks gängiger Bauart eignen, die zudem mit Farbdrucker und Netzwerkkarte ausgestattet sind.

Im Rahmen von weiteren Prüfuntersuchungen im Rahmen von turnusmäßigen Kontrollen der Verkehrssicherheit von Fahrzeugen wurde als Prüffahrzeug ein Mittelklassemodell einer Limousine (gehobene Mittelklasse) an einer Prüfstelle in Göppingen untersucht. Als Messaufbau wurden zwei Beschleunigungsaufnehmer an den Stoßdämpferdomen links und rechts im Motorraum eingesetzt. Eine Record-Box wurde im Innenraum des Fahrzeugs platziert, wobei die Stromversorgung über das Bordnetz des Fahrzeugs erfolgte (Zigarettenanzünder). Die serielle Datenübertragung erfolgte an einen Dell-Laptop-Computer.

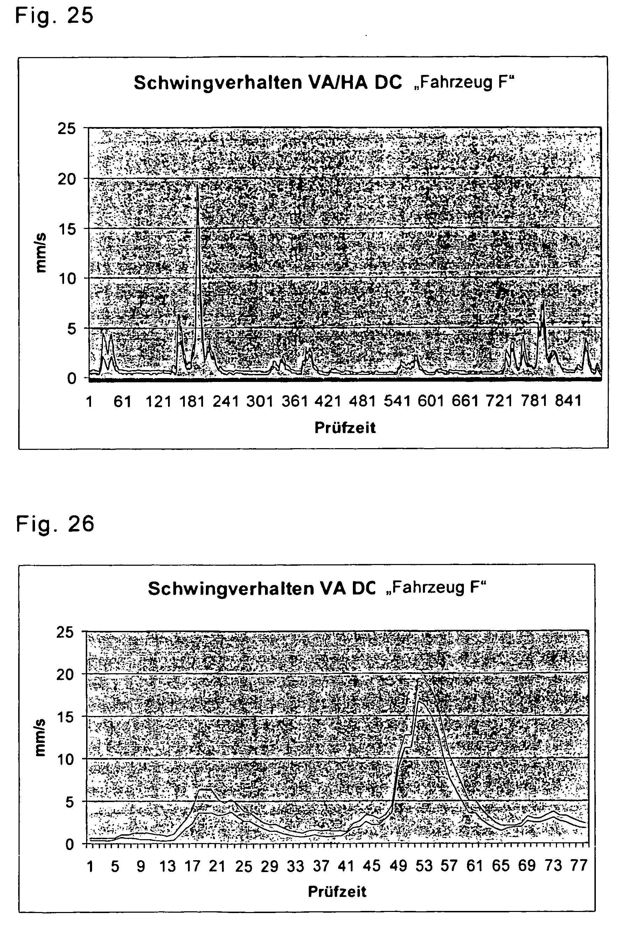

Während des Messvorgangs erfolgte die Messung bzw. Speicherung der Daten, indem die Messung per Laptop gestartet wurde. Das Fahrzeug wurde mit der Vorderachse in den Bremsenprüfstand eingefahren. Durch Betätigung der Fußbremse wurde der Vorderwagen in Schwingungen versetzt. Das Diagramm der Fig. 25 verdeutlicht das Schwingungsverhalten des Fahrzeugs (PKW vom Typ "Fahrzeug F").

Anschließend wurde das Fahrzeug mit den Vorderrädern ausgefahren und die Hinterräder in den Bremsenprüfstand eingefahren. Wiederum durch Bremsvorgänge wurde das Heck in Schwingungsbewegungen versetzt. Danach erfolgte das Ausfahren des Fahrzeuges aus dem Bremsenprüfstand, womit das Ende der Messreihe erreicht war. Die schematischen Diagramme der Figuren 26 bis 29 verdeutlichen die unterschiedlichen Schwingungseffekte bei unterschiedlichen Anregungen der Vorderachse sowie der Hinterachse des in Fig. 26 bereits untersuchten Fahrzeugs ("Fahrzeug F").

Als Fazit aus diesen Versuchen lässt sich ziehen, dass das erwartete Ergebnis sehr exakt eingetreten ist, so dass die zuvor getroffenen Annahmen in vollem Umfang bestätigt werden konnten. Es konnte gezeigt werden, dass es möglich ist, mit nur zwei Schwingungsaufnehmern das Dämpfungs- und Schwingungsverhalten der Vorder- und Hinterachsdämpfer zu erfassen. Die Messung im Bremsen-Rollenprüfstand ist dazu sehr gut geeignet. Die Messergebnisse sind mit unterschiedlichen Fahrzeugen weitest gehend vergleichbar, da der Vorgang grundsätzlich immer derselbe ist, und die mechanischen Belastungen durch die Rollen und das Ein- Ausfahren aus dem Prüfstand kaum variieren. Somit wird mit der erfindungsgemäßen Methode eine reproduzierbare, einfache und sehr leicht handhabbare Überprüfung aller Fahrzeuge bei der turnusmäßig fälligen Hauptuntersuchung geschaffen.

Der Messsystemaufbau kann auch hierbei bspw. vorsehen, dass ein mobiles Messsystem für Fahrwerksmessungen in Fahrzeugen verwendet wird, mit folgenden Komponenten:
- Gehäuse: 19-Zoll-Einschubgehäuse mit Frontplatte (je nach Sensoranzahl entsprechende BNC- Buchsen);
- Netzteil: intern 12 / 24V 2 A (z.B. Anschluss an Zigarettenanzünder / Kfz-Bordnetz);
- Signalauswertung: SiViB 1503 für je 3 Schwingungssensoren mm/s - gSE,
   Temperatureingänge für PT1000,
   Eingang für Drehzahlsignal max. 6 Kanäle,
   je nach Ausführung sind von2 bis zu 6 SiViB 1503 möglich,
   das ergibt 6 bis max. 18 Sensoreingänge;
- Sensoren: Beschleunigungsaufnehmer Al 100.012.040,
   Empfindlichkeit 100 mV/g +/- 10%,
   Messbereich max. 50g,
   Frequenzbereich 0,5 - 10.000Hz +/- 3dB,
   5.000 - 50.000 Hz für Spike- Energy- Messung gSE,
   Stromversorgung 2-10mA, +18V - 28VDC,
   Temperaturbereich -40 ...+80°C, Kabel bis 200°C,
   Gewicht 5 Gramm, Kabellänge 4m,
   Kabel 2-adrig abgeschirmt -2,7mm, FEP- Teflon Isolierung;
PC- Anbindung: CAN-Bus Adapter auf USB.

Nachfolgend wird die Erfindung nochmals zusammengefasst. Die Beschleunigungsaufnehmer werden an den verschiedenen Fahrwerksteilen befestigt. Dazu sind beigefügte Adapter für die Stoßdämpfer zu verwenden. An Achsteilen und Lenkern sind die Sensoren mit den Adapterplatten über Kabelbinder sicher und fest zu befestigen. Die Auswerte- Hardware ist sicher über die vorhandenen Sicherheitsgurte auf der Rückbank des Fahrzeugs zu verzurren. Die Kabel der Sensoren sollten natürlich entsprechend geschützt und sicher verlegt werden, nötigenfalls mit Kabelbindern bzw. reißfestes Tape-Band zu befestigen.

Die Messbox wird über ein USB- Kabel mit einem Notebook verbunden. Auf dem Notebook ist die entsprechende Auswertesoftware installiert und somit ist eine Datenverwertung und Aufzeichnung im Fahrzeug sofort möglich.

Beim Gegenstand der Patentanmeldung liegt die Grundlage in einer Schwingungsmessung mit Beschleunigungssensoren, bspw. mit Piezo- Beschleunigungsaufnehmern. Neu ist die Anwendung der Messung in Kraftfahrzeugen und zwar an statischen, also sich nicht drehenden Teilen. Die Anbringung der Sensoren erfolgt bspw. am oberen Ende der Stoßdämpferkolbenstange. Ebenso können die Sensoren am Stoßdämpferdom angeordnet oder an den Federn angebracht werden. Weiterhin ist eine Anbringung der Sensoren am Fahrwerk oder an Stabilisatoren sinnvoll und möglich.

Durch die unterschiedlichen Messpunkte können die verschiedensten Bauteile gemessen werden. So ist eine Beurteilung vom einzelnen Stoßdämpfer, bis hin zum einzelnen Traggelenk möglich. Dadurch wird ein defektes Bauteil sofort entdeckt. Selbst Schäden, die noch lange nicht vom Fahrer, oder gar von der Werkstatt, oder von einer technischen Prüfungsstelle bemerkt werden, sind mit der Schwingungsmesstechnik zu ermitteln. Das bedeutet einmal, dass nicht nur Teile auf Verdacht ausgetauscht werden. Und zum zweiten wird ein Austausch nur erforderlich, wenn auch wirklich ein Schaden vorliegt.

Der Einsatz im Kfz-Bereich verspricht großen Nutzen, da hierzulande alle Kraftfahrzeuge in regelmäßigen Abständen (z.B. alle zwei Jahre) zu einer technischen Untersuchung (sog. Hauptuntersuchung) müssen; hier gibt es die Aufgabe, eine Stoßdämpferprüfung durchzuführen. Bedingt durch ein praktikables Prüfsystem beschränkt sich die Prüfstelle bzw. der Prüfingenieur auf eine Sichtkontrolle. Hierbei werden nur augenfällig verschlissene und undichte Dämpfer erkannt. Fahrzeuge mit defekten Stoßdämpfern bekommen auf diese Weise die Verkehrssicherheit bescheinigt, was im Interesse einer allgemeinen Verkehrssicherheit für alle Verkehrsteilnehmer zu vermeiden ist.

Mit Hilfe der oben beschriebenen Messmethode ist es grundsätzlich möglich, die Prüfung durchzuführen. Jedoch muss dazu das Fahrzeug mit den angebrachten Sensoren über geeignete Prüfzyklen gefahren werden, was jedoch eine zeitlich und organisatorisch schwierig zu erfüllende Aufgabe ist. Eine Abhilfe kann durch ein erfindungsgemäßes Verfahren geschaffen werden. Jedes Fahrzeug fährt bei den Prüforganisationen grundsätzlich über den Rollen- Bremsenprüfstand. Durch das Einfahren in den Prüfstand und die Bremsbewegungen wird das Fahrzeug in Schwingungen versetzt, die über die am Stoßdämpferdom angebrachten Schwingungssensoren gemessen werden. Das bedeutet, dass immer eine vergleichbare Messmöglichkeit zur Verfügung steht. Der Vorgang ist immer der gleiche und somit sind die Ergebnisse alle miteinander vergleichbar.

Als Besonderheit ist noch zu erwähnen, dass die Messung der Vorderachse und der Hinterachse über nur zwei Sensoren an den vorderen Stoßdämpferdomen erfolgen kann. Die Schwingwerte der Hinterachse werden über die Karosserie bis nach vorne übertragen. Durch die Anbringung am Dämpferdom werden das gesamte Federbein und die gesamte Radaufhängung mit gemessen. Sobald irgendein Teil defekt ist und größere Schwingwerte erzeugt werden, wird dies aufgezeichnet. Das Ergebnis kann mit einer sog. Ampelfunktion bewertet werden. Geringe Schwingwerte bedeuten den grünen Bereich. Erhöhte Werte, die eine Bewertung durch den Prüfer bedeutet ist Gelb und hohe Werte bedeuten Rot und keine Plakette.

## Patentansprüche

1. Verfahren zur Erfassung und/oder Auswertung von Schwingungen bewegter und/oder einen Antrieb aufweisender Körper und/oder Strukturen, nämlich von Fahrzeugen oder Kraftfahrzeugen, bei dem die Signale wenigstens eines Schwingungssensors, der mit einer Auswerteeinheit gekoppelt ist, ausgewertet werden, wobei der Schwingungssensor einen Messaufnehmer umfasst, der ein Schwingungsverhalten des Fahrzeugs oder Kraftfahrzeugs erfasst und in Messsignale wandelt, **dadurch gekennzeichnet, dass** das Fahrzeug oder Kraftfahrzeug über wenigstens eine Schwelle oder über mehrere zueinander versetzt und in Fahrtrichtung um ca. einen Meter voneinander beabstandet angeordnete Schwellen gefahren wird, durch die das Fahrwerk des Fahrzeugs oder Kraftfahrzeugs zu Schwingungen angeregt wird, dass die Schwelle ca. 50 Millimeter hoch und mindestens 30 Zentimeter breit ist und dass im Rahmen der Auswertung in einem Diagramm ablesbar ist, wie Zug- und Druckstufe eines Stoßdämpfers des Fahrwerks arbeiten.

2. Verfahren nach Anspruch 1, wobei dass das Schwingungsverhalten des Körpers bzw. der Struktur mittels eines piezoelektrischen, mittels eines mikromechanischen und/oder mittels eines elektrodynamischen Messaufnehmers erfasst wird.

3. Verfahren nach Anspruch 1 oder 2, wobei der wenigstens eine Schwingungssensor die Schwingungen des Körpers bzw. der Struktur unmittelbar bzw. weitgehend ungedämpft erfasst.

4. Verfahren nach einem der Ansprüche 1 bis 3, wobei das Schwingungsverhalten einer Fahrzeugkarosserie erfasst wird.

5. Verfahren nach einem der Ansprüche 1 bis 3, wobei das Schwingungsverhalten eines Fahrwerks eines Kraftfahrzeugs, insbesondere eines PKWs oder eines LKWs, erfasst wird.

6. Verfahren nach einem der Ansprüche 1 bis 5, wobei die von dem wenigstens einen Schwingungssensor gelieferten Messsignale gespeichert und/oder visualisiert werden.

7. Verfahren nach einem der Ansprüche 1 bis 6, wobei mehrere Schwingungssensoren verwendet werden.

8. Verfahren nach einem der Ansprüche 1 bis 7, wobei die Kopplung des Schwingungssensors mit der Auswerteeinheit über eine drahtlose Funkübertragung realisiert ist.

## Claims

1. Method for detecting and/or evaluating vibrations of members and/or structures which are moved and/or which have a drive, that is to say, of vehicles or motor vehicles, in which the signals of at least one vibration sensor which is coupled to an evaluation unit are evaluated, the vibration sensor comprising a measurement sensor which detects a vibration behaviour of the vehicle or motor vehicle and converts it into measurement signals, **characterised in that** the vehicle or motor vehicle is driven over at least one threshold or a plurality of thresholds which are arranged in a state offset with respect to each other and which are spaced apart from each other in the travel direction by approximately one metre and by means of which the chassis of the vehicle or motor vehicle is caused to vibrate, **in that** the threshold is approximately 50 mm high and at least 30 centimetres wide and **in that**, in the course of the evaluation, it is possible to read off from a chart how the tension stage and pressure stage of a shock absorber of the chassis operate.

2. Method according to claim 1, wherein the vibration behaviour of the member or the structure is detected by means of a piezoelectric, by means of a micromechanical and/or by means of an electrodynamic measurement sensor.

3. Method according to claim 1 or claim 2, wherein the at least one vibration sensor detects the vibrations of the member or the structure directly or in a substantially undamped manner.

4. Method according to any one of claims 1 to 3, wherein the vibration behaviour of a vehicle bodywork is detected.

5. Method according to any one of claims 1 to 3, wherein the vibration behaviour of a chassis of a motor vehicle, in particular a passenger car or a lorry, is detected.

6. Method according to any one of claims 1 to 5, wherein the measurement signals supplied by the at least one vibration sensor are stored and/or displayed.

7. Method according to any one of claims 1 to 6, wherein a plurality of vibration sensors are used.

8. Method according to any one of claims 1 to 7, wherein the coupling of the vibration sensor to the evaluation unit is carried out by means of a wireless radio transmission.

## Revendications

1. Procédé de mesure et/ou d'analyse de vibrations d'éléments et/ou de structures mobiles et/ou comprenant un entraînement, plus particulièrement de véhicules ou de véhicules à moteurs, dans lequel les signaux d'au moins un capteur de vibrations, qui est couplé avec une unité de couplage, sont analysés, le capteur de vibrations comprenant un capteur de mesure qui mesure un comportement vibrant du véhicule ou du véhicule à moteur et le transforme en signaux de mesure, **caractérisé en ce que** le véhicule ou le véhicule à moteur est déplacé au moins au-dessus d'un seuil ou sur plusieurs seuils décalés les uns par rapport aux autres et distants entre eux d'environ un mètre dans la direction du déplacement, qui provoquent des vibrations dans le châssis du véhicule ou du véhicule à moteur, **en ce que** le seuil présente une hauteur d'environ 50 millimètres et une largeur d'au moins 30 centimètres et **en ce que**, lors de l'analyse, il est possible de lire sur une courbe comment fonctionnent l'étage de traction et l'étage de pression d'un amortisseur du châssis.

2. Procédé selon la revendication 1, dans lequel le comportement vibrant de l'élément ou de la structure est mesuré à l'aide d'un capteur de mesure piézoélectrique, micromécanique et/ou électrodynamique.

3. Procédé selon la revendication 1 ou 2, dans lequel au moins un capteur de vibrations mesure directement ou de manière largement non amortie les vibrations de l'élément ou de la structure.

4. Procédé selon l'une des revendications 1 à 3, dans lequel le comportement vibrant d'une carrosserie de véhicule est mesuré.

5. Procédé selon l'une des revendications 1 à 3, dans lequel le comportement vibrant d'un châssis de véhicule à moteur, plus particulièrement d'une voiture ou d'un poids-lourd, est mesuré.

6. Procédé selon l'une des revendications 1 à 5, dans lequel les signaux de mesure délivrés par l'au moins un capteur de vibrations sont enregistrés et/ou visualisés.

7. Procédé selon l'une des revendications 1 à 6, dans lequel plusieurs capteurs de vibrations sont utilisés.

8. Procédé selon l'une des revendications 1 à 7, dans lequel le couplage du capteur de vibrations avec l'unité d'analyse est effectué à l'aide d'une transmission radio sans fil.
